# EUROPÄISCHE PATENTSCHRIFT

(11) **EP 3 494 331 B1**
(45) Veröffentlichungstag und Bekanntmachung des Hinweises auf die Patenterteilung: **06.10.2021**
(21) Anmeldenummer: 17751332.2
(22) Anmeldetag: 01.08.2017
(51) Int. Cl.: F16H 61/12

(54) **HYDRAULIKSYSTEM FÜR EIN AUTOMATIKGETRIEBE EINES KRAFTFAHRZEUGS**
HYDRAULIC SYSTEM FOR AN AUTOMATIC TRANSMISSION OF A MOTOR VEHICLE
SYSTÈME HYDRAULIQUE POUR UNE BOÎTE DE VITESSES AUTOMATIQUE D'UN VÉHICULE AUTOMOBILE

(30) Priorität: 03.08.2016 DE 102016214378
(43) Veröffentlichungstag der Anmeldung: 12.06.2019
(73) Patentinhaber: Audi AG, 85045 Ingolstadt (DE)
(72) Erfinder: WEINHARDT, Mathias, 85051 Ingolstadt (DE)
(86) Internationale Anmeldenummer: PCT/EP2017/069395
(87) Internationale Veröffentlichungsnummer: WO 2018/024710

(56) Entgegenhaltungen:
- EP-A1- 1 860 349
- DE-A1- 10 138 777
- DE-A1-102011 100 809
- DE-A1-102013 003 894
- DE-A1-102014 003 083
- DE-T5-112013 001 599
- JP-A- 2000 205 141

## Beschreibung

Die Erfindung betrifft ein Hydrauliksystem für ein Automatikgetriebe, insbesondere Doppelkupplungsgetriebe, eines Kraftfahrzeugs nach dem Patentanspruch 1.

Bei einem Doppelkupplungsgetriebe ist mittels zweier Teilgetriebe ein vollautomatischer Gangwechsel ohne Zugkraftunterbrechung ermöglicht. Die Übertragung des Moments erfolgt über eine von zwei Kupplungen, die die zwei Teilgetriebe mit dem Antrieb verbindet. Die Kupplungen sowie die Gangsteller zum Einlegen der Gänge werden über Hydraulikzylinder betätigt, die hydraulisch über ein Hydrauliksystem ansteuerbar sind.

Aus der DE 10 2013 003 894 A1 ist ein gattungsgemäßes Hydrauliksystem bekannt, das einen Druckspeicher zur Bereitstellung eines Speicherdruckes im Hydrauliksystem aufweist. In einem, vom Druckspeicher zum Kupplungs-Hydraulikzylinder führenden Kupplungspfad ist ein von einer elektronischen Steuereinheit ansteuerbares Steuerventil angeordnet, mit dem der am Kupplungs-Hydraulikzylinder anliegende Hydraulikdruck einstellbar ist. Der Steuereinheit ist bevorzugt ein Drucksensor zugeordnet (DE 10 2013 003 894 A1), mit dem der am Kupplungs-Hydraulikzylinder anliegende Hydraulikdruck erfassbar ist. Zudem weist das Hydrauliksystem eine Lade-Hydraulikpumpe auf, die in einem Ladevorgang Hydraulikflüssigkeit in das Hydrauliksystem fördert, um den Speicherdruck zu erhöhen.

Der Druckspeicher ist in gängiger Praxis als eine Kolben-Zylinder-Einheit aufgebaut, die eine mit dem Kupplungspfad verbundene Ölkammer und einen vorgespannten Druckkolben aufweist, an dem ein Vorspanndruck anliegt. Die Vorspannung wird beispielhaft durch einen Gasdruck oder alternativ durch eine Feder erzielt. Bei vollständig entleerter Ölkammer wird der Druckkolben mit einer Vorspannkraft gegen einen mechanischen Anschlag im Druckspeicher gedrückt. Bei einem solchen vollkommen entleerten Zustand wird der Kupplungspfad nicht druckbeaufschlagt. Vielmehr herrscht in diesem Fall im Kupplungspfad ein Umgebungsdruck vor. Eine Fehlfunktion des Druckspeichers ist im Stand der Technik nur mit aufwendiger Sensorik erkennbar, beispielhaft eine Gasdruck-Reduzierung aufgrund von Gasleckage.

Die Aufgabe der Erfindung besteht darin, ein Hydrauliksystem bereitzustellen, bei dem mit reduziertem sensortechnischem Aufwand die Betriebssicherheit des Druckspeichers gewährleistet werden kann.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 weist die Steuereinheit ein Diagnosemodul auf, mit dem das Ladeverhalten, insbesondere ein Vorspanndruck, des Druckspeichers prüfbar ist. Hierzu sind in dem Diagnosemodul zumindest ein oder mehrere Referenzwerte hinterlegt, die einen zeitlichen Referenz-Speicherdruckverlauf während eines Ladevorgangs wiedergeben. Für die Druckspeicher-Diagnose erfolgt ein Ladebetrieb, bei dem das im Kupplungspfad angeordnete Kupplungsventil durchgängig geöffnet wird, damit der Drucksensor einen zeitlichen Ist-Speicherdruckverlauf während des Ladebetriebs erfassen kann. Zur Auswertung des zeitlichen Ist-Speicherdruckverlaufes weist das Diagnosemodul eine Auswerteeinheit auf, mit der ein Druckspeicher-Fehlerfall erkennbar ist, sofern eine signifikante Abweichung zwischen dem Referenz-Speicherdruckverlauf und dem Ist-Speicherdruckverlauf vorliegt.

In einer technischen Realisierung ist der Druckspeicher des Hydrauliksystems als eine Kolben-Zylinder-Einheit ausgeführt, die eine mit dem Kupplungspfad verbundene Ölkammer sowie einen vorgespannten Druckkolben aufweist. Der Druckkolben wird mit einem Vorspanndruck beaufschlagt, der als ein Druckspeicher-Kennwert in einer Spezifikation (d.h. konstruktiven Auslegung) des Druckspeichers angegeben ist. Bei vollständig entleerter Ölkammer drückt der Druckkolben mit dem Vorspanndruck (der stark temperaturabhängig ist) gegen einen mechanischen Anschlag des Druckspeichers.

Für die Druckspeicher-Diagnose erfolgt der Ladebetrieb bei konstanter Ladedrehzahl der Hydraulik-Ladepumpe. Auf diese Weise wird der Kupplungspfad mit Hydraulikflüssigkeit gefüllt, und zwar bis zu einem Vorspanndruck-Zeitpunkt, zu dem der von dem Drucksensor erfasste Hydraulikdruck (d.h. der Ist-Speicherdruck) so groß ist wie der (Ist-)Vorspanndruck des Druckspeichers. Im weiteren Verlauf des Ladevorgangs wird ab dem Vorspanndruck-Zeitpunkt die Ölkammer des Druckspeichers gefüllt, und zwar unter Verstellung des Druckkolbens sowie unter weiterer Erhöhung des Ist-Speicherdrucks.

Bei einem solchen Ladevorgang ergibt sich eine charakteristische Zeit-Ladekurve. Diese kann zwischen einem Diagnose-Startzeitpunkt, zu dem die Druckspeicher-Ölkammer vollständig entleert ist, und dem oben erwähnten Oberer Schwellwert verlaufen und für die Druckspeicher-Diagnose nutzbar sein: So weist die Zeit-Ladekurve (d.h. der Ist-Speicherdruckverlauf) bis zum Erreichen des Vorspanndruck-Zeitpunktes einen steilen Druckgradienten und nach dem Vorspanndruck-Zeitpunkt einen demgegenüber stark reduzierten Druckgradienten auf. Bei einer einwandfreien Druckspeicher-Funktion stimmt der im Vorspanndruck-Zeitpunkt erfasste Ist-Vorspanndruck mit der konstruktiven Auslegung des Druckspeicher-Vorspanndrucks überein, der unter Berücksichtigung der starken Temperaturabhängigkeit in dem Diagnosemodul hinterlegt ist.

In der Auswerteeinheit des Diagnosemoduls wird der vom Drucksensor zum Vorspanndruck-Zeitpunkt erfasste Ist-Speicherdruck mit dem vordefinierten Referenz-Vorspanndruck des Druckspeichers verglichen. Bei einer signifikanten Abweichung zwischen beiden Werten wird ein nicht plausibler Vorspanndruck im Druckspeicher festgestellt.

Wie bereits oben erwähnt, erfolgt der Diagnosestart unter der Diagnose-Startbedingung, dass die Ölkammer des Druckspeichers vollständig entleert ist und im Hydrauliksystem ein Umgebungsdruck vorherrscht. Zum Erreichen dieser Diagnosestart-Bedingung wird vorab zumindest ein Hydraulikzylinder der Kupplung und/oder der Gangsteller so lange betätigt, bis aufgrund der mit der Hydraulikzylinder-Betätigung verbundenen Hydraulikflüssigkeits-Entnahme der vom Drucksensor erfasste Ist-Speicherdruck bis auf den Umgebungsdruck reduziert ist. In diesem Fall ist auch automatisch die Druckspeicher-Ölkammer vollständig entleert.

Zur Ermittlung des Vorspanndruck-Zeitpunkts kann die Auswerteeinheit die zeitlichen Druckgradienten vor und nach dem Vorspanndruck-Zeitpunkt auswerten und miteinander vergleichen sowie daraus den Vorspanndruck-Zeitpunkt ermitteln oder bestimmen, ob ein Druckspeicher-Fehler vorliegt oder nicht.

Bei einem Doppelkupplungsgetriebe liegen zwei Kupplungen vor, die jeweils über im Wesentlichen identische Kupplungspfade mit dem Druckspeicher verbunden sind. In diesem Fall kann die oben erläuterte Druckspeicher-Diagnose doppelt ausgeführt werden, und zwar im Rahmen einer ersten Teildiagnose mit dem im ersten Kupplungspfad angeordneten Drucksensor sowie mit dem im zweiten Kupplungspfad geschlossenen Kupplungsventil, und im Rahmen einer zweiten Teildiagnose mit dem im zweiten Kupplungspfad angeordneten Drucksensor sowie mit dem im ersten Kupplungspfad geschlossenen Kupplungsventil. In der Auswerteeinheit werden für ein Plausibilitätsprüfung der Druckspeicher-Diagnose die erste und die zweite Teildiagnose miteinander verglichen. Bei Vorliegen identischer Druckspeicher-Fehler sowohl in der ersten als auch in der zweiten Teildiagnose erkennt die Auswerteeinheit einen Druckspeicher-Fehler. Im Unterschied dazu erkennt die Auswerteeinheit bei Vorliegen unterschiedlicher Fehler-Ergebnisse in den beiden Teildiagnosen einen Fehler (d.h. z.B. eine Leckage) in einem der beiden Kupplungspfade.

In einer weiteren Ausführungsform kann das Diagnosemodul zusätzlich eine eigene Kupplungspfad-Diagnose durchführen, die als eine Folge-Diagnose zeitlich unmittelbar an die Vorspanndruck-Diagnose anschließt. Für die Kupplungspfad-Diagnose wird der während der Vorspanndruck-Diagnose durchgeführte Diagnose-Ladebetrieb bis zum Erreichen eines maximalen Speicherdruckes (d.h. dem Oberer Schwellwert) fortgesetzt und dort zu einem Ausschalt-Zeitpunkt beendet. Die Auswerteeinheit vergleicht nach dem Ladebetrieb-Ende den weiteren Ist-Speicherdruckverlauf mit hinterlegten Referenzwerten und wertet aus, ob ein fehlerfreier oder einer fehlerbehafteter, leckagebedingter Druckabfall im (vom Drucksensor erfassten) Speicherdruckverlauf vorliegt.

Bevorzugt ist es, wenn die obige Kupplungspfad-Diagnose durchgeführt wird, sofern ein fehlerfreier Vorspanndruck im Druckspeicher sichergestellt ist. Bevorzugt kann somit die Kupplungspfad-Diagnose im Diagnosemodul nur unter der Bedingung durchgeführt werden, dass bei der Vorspanndruck-Diagnose ein fehlerfreier Druckspeicher-Vorspanndruck vorliegt.

Das Hydrauliksystem kann außerdem mehrere Gangstellerpfade aufweisen, die vom Druckspeicher zum Gangsteller-Hydraulikzylinder des jeweiligen Gangstellers führen. In jedem der Gangstellerpfade ist ein von der Steuereinheit ansteuerbares Gangstellerventil angeordnet, mit dem der am Gangsteller-Hydraulikzylinder anliegende Hydraulikdruck im jeweiligen Gangstellerpfad einstellbar ist.

Bei einem solchen Hydrauliksystem kann mit dem Diagnosemodul der elektronischen Steuereinheit zusätzlich eine Gangstellerpfad-Diagnose durchgeführt werden, bei der das Diagnosemodul unter Nutzung des im obigen, zumindest einen Kupplungspfad angeordneten Drucksensors ein Leckage-Verhalten in dem jeweiligen Gangstellerpfad prüft. Die Gangsteller-Diagnose ist bevorzugt als eine Folge-Diagnose zeitlich nach der oben erwähnten Kupplungspfad-Diagnose durchführbar. Die Gangsteller-Diagnose erfolgt dabei bevorzugt ausschließlich unter der Bedingung, dass in der vorangegangenen Kupplungspfad-Diagnose zumindest ein Kupplungspfad mit fehlerfreier Leckage erkannt ist. In diesem Fall wird der Drucksensor in dem als fehlerfrei erkannten Kupplungspfad (nachfolgend Referenz-Kupplungspfad) für die anschließende Gangsteller-Diagnose verwendet.

Für die Gangstellerpfad-Diagnose öffnet das Diagnosemodul das im Referenz-Kupplungspfad angeordnete Kupplungsventil, damit der im Referenz-Kupplungspfad angeordnete Drucksensor einen Ist-Speicherdruckverlauf erfassen kann. Zudem öffnet das Diagnosemodul ein Druckregelventil, das in einer zu den Gangstellern führenden Verbindungsleitung angeordnet ist, um eine Druckverbindung zwischen dem im Referenz-Kupplungspfad angeordneten Drucksensor und dem im Gangstellerpfad angeordneten Gangstellerventil herzustellen.

In einem ersten Diagnoseschritt erfolgt ein Diagnose-Ladebetrieb, bei der vom Drucksensor erfasste Ist-Speicherdruck bis auf einen oberen Schwellwert erhöht wird, zu dem die Lade-Hydraulikpumpe ausgeschaltet wird. Nach dem Ende des Diagnose-Ladebetriebs kann eine dritte Auswerteeinheit einen Druckgradienten des Speicherdruckverlaufes über den Drucksensor erfassen sowie mit einem Referenz-Druckgradienten vergleichen und auswerten, ob ein fehlerfreier oder fehlerbehafteter Druckabfall (das heißt Gangsteller-Leckage) im Speicherdruckverlauf vorliegt.

In einer technischen Umsetzung kann das Hydrauliksystem mehrere zueinander parallel geschaltete Gangstellerpfade aufweisen, in denen jeweils ein Gangstellerventil angeordnet ist, das zwischen einer Sperr-Ventilstellung sowie zwei Durchfluss-Ventilstellungen verstellbar ist.

Bei einer solchen Konstellation kann die Gangstellerpfad-Diagnose im zu prüfenden Gangstellerpfad für jede der Durchfluss-Ventilstellungen separat durchgeführt und auf Fehlerfreiheit ausgewertet werden. Die Gangstellerventile in den nicht zu prüfenden Gangstellerpfaden sind dagegen allesamt in der Sperr-Ventilstellung geschaltet, um die Meßgenauigkeit am zu prüfenden Gangstellerpfad zu erhöhen.

Die oben erwähnte Erfassung des Druckgradienten im Speicherdruckverlauf erfolgt innerhalb eines Messzeitintervalls. Dessen Startzeitpunkt liegt bevorzugt unmittelbar nach dem Ende des Diagnose-Ladebetriebs. Während der Messung des Druckgradienten erfolgt zudem auch eine Erfassung des Ist-Speicherdrucks zum Startzeitpunkt und zum Mess-Endzeitpunkt des Messzeitintervalls. Mittels dieser beiden Absolut-Druckwerte kann das Diagnosemodul dann eine fehlerfreie Diagnose erkennen, wenn eine ausreichend große Speicherdruckdifferenz zwischen dem Start- und Endzeitpunkt vorliegt.

Im Rahmen der weiter oben erwähnten Vorspanndruck-Diagnose prüft das Diagnosemodul unter Nutzung des im Kupplungspfad angeordneten Drucksensors, ob der Vorspanndruck im Druckspeicher plausibel ist oder nicht. Der Vorspanndruck ist ein relevanter Parameter für eine einwandfreie Druckspeicher-Funktionsfähigkeit. Ein ebenfalls relevanter Parameter für die Druckspeicher-Funktionsfähigkeit ist das maximal vom Druckspeicher aufnehmbare Speichervolumen bzw. Ist-Speichervolumen. Die oben erwähnte Vorspanndruck-Diagnose hat jedoch keine Aussagekraft im Hinblick auf das Ist-Speichervolumen des Druckspeichers. Gegebenenfalls kann nämlich - trotz plausiblem Druckspeicher-Vorspanndruck - die Öl-Aufnahmefähigkeit des Druckspeichers zum Beispiel aufgrund einer Druckkolben-Verklemmung stark reduziert sein. In diesem Fall kann das Ist-Speichervolumen stark von dem in der Druckspeicher-Spezifikation angegebenen Referenz-Speichervolumen (d.h. dem konstruktiv vorgegebenen Speichervolumen) abweichen.

Vor diesem Hintergrund wird erfindungsgmäß mittels des Diagnosemoduls eine eigene Speichervolumen-Diagnose durchgeführt werden. Bei der Speichervolumen-Diagnose wird zunächst der Druckspeicher in einem Diagnose-Ladebetrieb komplett mit Hydraulikflüssigkeit gefüllt. Anschließend wird vom Diagnosemodul einer der Gangsteller-Hydraulikzylinder als Referenz-Hydraulikzylinder ausgewählt. Dieser wird während eines DiagnoseZeitintervalls betätigt, wodurch eine Hydraulikflüssigkeits-Entnahme erfolgt, die sich bei einer intermittierenden Betätigung des Referenz-Hydraulikzylinders (d.h. Schluckvolumen) und der Hydrauliksystem-Leckage ergibt. Der Referenz-Hydraulikzylinder wird im Diagnose-Zeitintervall solange betätigt, bis aufgrund der damit verbundenen Hydraulikflüssigkeits-Entnahme ein Umgebungsdruck im Hydrauliksystem vorliegt. Bei Umgebungsdruck ist die Ölkammer im Druckspeicher vollständig entleert, das heißt der Druckkolben ist mit einer Vorspannkraft gegen einen Anschlag des Druckspeichers gedrückt.

Das Diagnosemodul weist eine Auswerteeinheit auf, die die obige Hydraulikflüssigkeits-Entnahme ermittelt und mit einem dem konstruktiv vorgegebenen Speichervolumen entsprechenden Referenz-Druckspeichervolumen vergleicht. Bei Vorliegen einer signifikanten Abweichung wird ein Speichervolumen-Fehler erkannt.

In einer technischen Umsetzung weist der Referenz-Hydraulikzylinder einen Positionssensor auf, der die Kolben-Stellwege im Referenz-Hydraulikzylinder bei Gangsteller-Betätigungen erfasst. Das Diagnosemodul kann die Kolben-Stellwege während der Speichervolumen-Diagnose zu einem Gesamt-Stellweg aufintegrieren und daraus die mit den Gangsteller-Betätigungen verbundene Hydraulikflüssigkeits-Entnahme (das heißt das Schluckvolumen) berechnen.

In einer einfachen Ausführungsvariante kann das Vorliegen von Umgebungsdruck im Hydrauliksystem mit Hilfe des Positionssensors erkannt werden: So wird bei Erreichen des Umgebungsdruckes im Hydrauliksystem der Referenz-Hydraulikzylinder nicht mehr mit einem Betätigungsdruck beaufschlagt, der zu einer Kolben-Stellbewegung führt. Der Positionssensor erfasst daher, dass kein Kolben-Stellweg mehr im Referenz-Hydraulikzylinder zurückgelegt wird. Daraus folgert das Diagnosemodul, dass der Umgebungsdruck erreicht ist und das Diagnose-Zeitintervall beendet ist. Bei der obigen Speichervolumen-Diagnose ist zusätzlich zur Hydraulikflüssigkeits-Entnahme aufgrund der Referenz-Hydraulikzylinder-Betätigung (nachfolgend als Schluckvolumen bezeichnet) die mit einer permanenten Hydrauliksystem-Leckage verbundenen Hydraulikflüssigkeits-Entnahme zu berücksichtigen. Diese kann bevorzugt aus vorangegangenen Messungen und/oder Diagnosen bereits im Diagnosemodul hinterlegt sein.

Das Hydrauliksystem weist zusätzlich zum oben erwähnten Referenz-Gangstellerpfad zumindest einen vom Druckspeicher zum Kupplungs-Hydraulikzylinder führenden Kupplungspfad auf, in dem ein von der elektronischen Steuereinheit ansteuerbares Kupplungsventil angeordnet ist. Mit dem Kupplungsventil kann ein am Kupplungs-Hydraulikzylinder anliegender Hydraulikdruck eingestellt werden. Der elektronischen Steuereinheit ist außerdem ein Drucksensor zugeordnet, mit dem der am Kupplungs-Hydraulikzylinder anliegende Hydraulikdruck erfassbar ist.

Während der Speichervolumen-Diagnose kann sowohl der oben beschriebene Kupplungspfad als auch der zum Referenz-Hydraulikzylinder führende Referenz-Gangstellerpfad mit dem im Hydrauliksystem vorherrschenden Ist-Speicherdruck beaufschlagt sein. Dadurch kann in meßtechnisch einfacher Weise der Ist-Speicherdruckverlauf während der Speichervolumen-Diagnose erfasst werden. Zudem kann bei diesem Hydrauliksystem-Aufbau das Leckage-Verhalten des Kupplungspfads und des Referenz-Gangstellerpfads unter Nutzung des im Kupplungspfad angeordneten Drucksensors erfolgen. Im Gegensatz zum Referenz-Hydraulikzylinder, der im Referenz-Gangstellerpfad angeordnet ist, sind die Hydraulikzylinder der anderen Gangstellerpfade vom Speicherdruck entkoppelt, d.h. nicht mit Speicherdruck beaufschlagt.

Die Speichervolumen-Diagnose kann bevorzugt als eine Folge-Diagnose zeitlich nach einer Gangsteller-Diagnose durchgeführt werden. In diesem Fall kann die Speichervolumen-Diagnose nur unter der Bedingung erfolgen, dass bei der vorangegangenen Gangsteller-Diagnose zumindest ein fehlerfrei funktionierender Gangsteller erkannt ist, der als Referenz-Gangsteller für die Speichervolumen-Diagnose nutzbar ist.

Die Hoch- und Niederdruckkreisläufe des Hydrauliksystems können über eine Bypassleitung mit integriertem Speicherladeventil verbunden sein. Das Speicherladeventil kann in einer Nichtladestellung die Hydraulikpumpe strömungstechnisch mit dem Niederdruckkreislauf verbinden, während gleichzeitig die Hydraulikpumpe vom Hochdruckkreislauf entkoppelt ist. Umgekehrt kann das Speicherladeventil in einer Ladestellung die Hydraulikpumpe strömungstechnisch mit dem Hochdruckkreislauf verbinden, während gleichzeitig die Hydraulikpumpe entkoppelt vom Niederdruckkreislauf ist. Das Speicherventil kann zu einem ersten Umschaltzeitpunkt selbsttätig von der Ladestellung in die Nichtladestellung sich verstellen, und zwar dann, wenn der Speicherdruck im Hochdruckkreislauf einen oberen Druckschwellwert überschreitet. Umgekehrt kann sich das Speicherladeventil zu einem zweiten Umschaltzeitpunkt selbsttätig von der Nichtladestellung in die Ladestellung verstellen, wenn der Speicherdruck einen unteren Druckschwellwert unterschreitet.

Eine Fehlfunktion des Speicherladeventils ist im Stand der Technik nur mit aufwendiger Sensorik erkennbar. Beispielhaft kann eine solche Fehlfunktion auftreten, wenn es im federvorgespannten Speicherladeventil zu einem Federbruch kommt oder zum Beispiel aufgrund von Schmutz-Ablagerungen ein Stellweg des Speicherladeventils behindert ist. In diesem Fall besteht das Risiko, dass das Speicherladeventil nicht mehr bei plausiblen unteren/oberen Druckschwellwerten zwischen der Ladestellung und der Nicht-Ladestellung umschaltet. Als relevante Parameter für die Funktionsfähigkeit des Speicherladeventils sind die sogenannte Ventilspreizung, die der Druckunterschied zwischen dem oberen und dem unteren Druckschwellwert ist, sowie die Umschaltzeitpunkte zwischen den Lade- und Nichtladestellungen hervorzuheben.

Vor diesem Hintergrund kann die Steuereinheit ein Diagnosemodul aufweisen, mit dem eine Umschaltzeitpunkt-Diagnose durchführbar ist, bei der ermittelt wird, ob zum ersten Umschaltzeitpunkt der Ist-Speicherdruck im Bereich des oberen Druckschwellwerts liegt. Alternativ und/oder zusätzlich kann ermittelt werden, ob zum zweiten Umschaltzeitpunkt der Ist-Speicherdruck im Bereich des unteren Druckschwellwerts liegt. Bei Vorliegen einer signifikanten Abweichung des zum ersten Umschaltzeitpunkt erfassten Ist-Speicherdruckes vom oberen Druckschwellwert wird ein Fehlerfall erkannt. Umgekehrt wird bei einer signifikanten Abweichung des zum zweiten Umschaltzeitpunktes erfassten Ist-Speicherdruckes vom unteren Druckschwellwert ebenfalls ein Fehlerfall erkannt.

Das Hydrauliksystem kann in einer technischen Umsetzung zumindest einen Kupplungspfad aufweisen, der vom Druckspeicher zum Kupplungs-Hydraulikzylinder führt. In dem Kupplungspfad kann ein von der Steuereinheit ansteuerbares Kupplungsventil angeordnet sein, mit dem ein am Kupplungs-Hydraulikzylinder anliegender Hydraulikdruck einstellbar ist. Der elektronischen Steuereinheit kann ein Drucksensor zugeordnet sein, mit dem ein am Kupplungs-Hydraulikzylinder anliegender Hydraulikdruck erfassbar ist. In einer einfachen technischen Umsetzung kann der im Kupplungspfad angeordnete Drucksensor für die Erfassung des Ist-Speicherdruckes während der Umschaltzeitpunkt-Diagnose genutzt werden. Der im Kupplungspfad angeordnete Drucksensor erfüllt im normalen Fahrbetrieb eine Sicherheitsfunktion, bei der überwacht wird, ob die Kupplung drucklos bzw. druckbeaufschlagt ist. Der Kupplungspfad-Drucksensor kann während der Umschaltzeitpunkt-Diagnose in Doppelfunktion auch zur Erfassung des Ist-Speicherdruckes genutzt werden. Im Hinblick auf seine obige Sicherheitsfunktion im normalen Fahrbetrieb ist der Kupplungspfad-Drucksensor mit einem entsprechend geringen Messbereich (das heißt kostengünstig) ausgelegt. Der Messbereich des Drucksensors kann daher außerhalb, das heißt unterhalb des oberen Druckschwellwertes liegen, zu dem das Speicherladeventil von seiner Ladestellung in seine Nichtladestellung selbsttätig schaltet. In diesem Fall kann somit der Ist-Speicherdruck vom Kupplungspfad-Drucksensor zum ersten Umschaltzeitpunkt nicht unmittelbar erfasst werden. Von daher ist es bevorzugt, wenn eine Auswerteeinheit auf der Grundlage gemessener Druckwerte, die sich noch innerhalb des Drucksensor-Messbereiches befinden, ein Zeitfenster abschätzt, innerhalb dem bei einwandfreiem Speicherladeventil-Betrieb der erste Umschaltzeitpunkt und/oder der zweite Umschaltzeitpunkt liegt. Ermittelt die Auswerteeinheit, dass der erste/zweite Umschaltzeitpunkt außerhalb des Zeitfensters liegt, wird ein Fehlerfall erkannt. Beispielhaft kann die Auswerteinheit einen Extrapolier-Baustein aufweisen, der anhand der oben erwähnten gemessenen Druckwerte das oben erwähnte Zeitfenster extrapoliert.

Sofern bei der Umschaltzeitpunkt-Diagnose kein Fehlerfall ermittelt wurde, kann als Folgediagnose sich eine Ventilspreizung-Diagnose anschließen, bei der eine Ist-Ventilspreizung zwischen dem unteren und oberen Druckschwellwert ermittelt wird. Das Diagnosemodul kann eine Auswerteeinheit aufweisen, die die ermittelte Ist-Ventilspreizung mit einer Soll-Ventilspreizung vergleicht. Bei Vorliegen einer signifikanten Abweichung kann die Auswerteeinheit einen Fehlerfall erkennen.

Zur Ermittlung der Ist-Ventilspreizung kann die Auswerteeinheit ein Diagnosezeitintervall festlegen, das mit dem ersten Umschaltzeitpunkt startet und mit dem zweiten Umschaltzeitpunkt endet (das heißt während eines Nichtladebetriebes). In dem Diagnosezeitintervall erfolgt durch Betätigung eines Referenz-Hydraulikzylinders und durch eine Hydrauliksystem-Leckage eine Speicherdruck-Abnahme, die der Ist-Ventilspreizung entspricht. Zur Ermittlung dieser Speicherdruck-Abnahme während des Diagnosezeitintervalls wird bevorzugt wie folgt vorgegangen: So weist der Referenz-Hydraulikzylinder einen Positionssensor auf, der die Kolben-Stellwege bei Gangsteller-Betätigungen erfasst. Das Diagnosemodul kann die Kolben-Stellwege während des Diagnosezeitintervalls zu einem Gesamt-Diagnoseweg aufintegrieren und daraus die mit den Gangsteller-Betätigungen verbundene Druckabnahme berechnen. Die Auswerteeinheit kann dann aus der Summe der mit den Gangsteller-Betätigungen verbundenen Druckabnahme und der leckagebedingten Druckabnahme die Speicherdruck-Abnahme während des Diagnosezeitintervalls ermitteln. Die leckagebedingte Druckabnahme während des Diagnosezeitintervalls kann anhand vorangegangener Diagnosen oder Leckage-Messungen bestimmt werden.

Die ersten und zweiten Umschaltzeitpunkte beim Wechsel zwischen den Lade- und Nichtladestellungen können wie folgt ermittelt werden: So kann der Steuereinheit eine Strommesseinrichtung zugeordnet sein, mit der eine Ist-Stromaufnahme des Elektromotors erfassbar ist. Die Steuereinheit kann den Wechsel-Zeitpunkt von der hohen Stromaufnahme zur niedrigen Stromaufnahme als ersten Umschaltzeitpunkt erkennen. Umgekehrt kann die Steuereinheit den Wechsel-Zeitpunkt von niedrigen Stromaufnahme zur hohen Stromaufnahme als zweiten Umschaltzeitpunkt erkennen.

Der Referenz-Hydraulikzylinder kann in einer bevorzugten Ausführungsform ein Gangsteller-Hydraulikzylinder sein, der bei einer vorangegangenen Gangsteller-Diagnose als fehlerfrei erkannt worden ist. In einem vom Druckspeicher zum Referenz-Hydraulikzylinder führenden Referenz-Gangstellerpfad kann ein von der Steuereinheit ansteuerbares Steuerventil angeordnet sein, mit dem der am Referenz-Hydraulikzylinder anliegende Hydraulikdruck einstellbar ist.

Wie oben erwähnt, ist im Kupplungspfad ein von der elektronischen Steuereinheit ansteuerbares Kupplungsventil angeordnet, mit dem ein am Kupplungs-Hydraulikzylinder anliegender Hydraulikdruck einstellbar ist. Das Kupplungsventil ist zwischen einer Schließstellung und einer Durchflussstellung verstellbar. Bei einer Fehlfunktion des Kupplungsventils besteht die Gefahr, dass das Kupplungsventil nicht mehr in seine Schließstellung bringbar ist, so dass dauerhaft ein hoher Hydraulikdruck am Kupplungs-Hydraulikzylinder anliegt. Für einen solchen Fehlerfall ist aus Redundanzgründen ein zusätzliches, von der Steuereinheit ansteuerbares Sicherheitsventil bereitzustellen. Das Sicherheitsventil kann stromauf des Kupplungsventils vorgesehen sein und in seiner Schließstellung den Kupplungspfad vom Druckspeicher druckentkoppeln. In der Durchflussstellung des Sicherheitsventils ist der Kupplungspfad mit dem Speicherdruck druckbeaufschlagbar.

Um eine fehlerfreie Funktion des Sicherheitsventils zu gewährleisten, kann die Steuereinheit ein Diagnosemodul aufweisen, mit dem eine Sicherheitsventil-Diagnose durchführbar ist. Bei der Sicherheitsventil-Diagnose wird das Sicherheitsventil zu einem Diagnose-Startpunkt von seiner Durchflussstellung in die Schließstellung geschaltet, wodurch sich eine Ist-Druckabnahme stromab des Sicherheitsventils einstellt. Das Diagnosemodul weist eine Auswerteeinheit auf, die die Ist-Druckabnahme mit einer Soll-Druckabnahme vergleicht und bei Vorliegen einer signifikanten Abweichung einen Fehlerfall erkennt. Ein solcher Fehlerfall kann sich beispielhaft aufgrund von Schmutz-Ablagerungen ergeben, infolgedessen das Sicherheitsventil nicht mehr verstellbar ist.

Zur Erfassung der Ist-Druckabnahme kann der elektronischen Steuereinheit ein entsprechender Drucksensor zugeordnet sein. Bevorzugt kann hierfür der Drucksensor zur Erfassung eines am Kupplungs-Hydraulikzylinder anliegenden Hydraulikdruckes genutzt werden. Im normalen Fahrbetrieb erfüllt der Drucksensor eine Sicherheitsfunktion, bei der überwacht wird, ob die Kupplung drucklos bzw. druckbeaufschlagt ist. Während der Sicherheitsventil-Diagnose erfüllt dagegen der Drucksensor in Doppelfunktion die Erfassung des oben erwähnten Ist-Druckabfalles stromab des Sicherheitsventils. Der Drucksensor kann bevorzugt zwischen dem Kupplungsventil und dem Kupplungs-Hydraulikzylinder angeordnet sein. Zur einwandfreien Erfassung der Ist-Druckabnahme ist es bevorzugt, wenn das Kupplungsventil um einen Zeitversatz vor dem oben erwähnten Diagnose-Startzeitpunkt in seine Durchflussstellung verstellt wird. Zudem ist es im Hinblick auf eine fehlerfreie Erfassung der Ist-Druckabnahme bevorzugt, wenn die Hydraulikpumpe während der Sicherheitsventil-Diagnose im Ladebetrieb ist, das heißt mit einer Drehzahl angesteuert ist, um im Hochdruckkreislauf einen ausreichend großen Speicherdruck zu gewährleisten. Außerdem ist es bevorzugt, wenn während der Sicherheitsventil-Diagnose die Gangsteller-Hydraulikzylinder vom Hochdruckkreislauf druckentkoppelt sind.

Der Ist-Speicherdruck im Hochdruckkreislauf ist während des Normalbetriebs und bevorzugt auch während der Sicherheitsventil-Diagnose zwischen einem oberen und einem unteren Druckschwellwert geregelt. Aus Kostengründen kann der vom Drucksensor maximal erfassbare Messbereich außerhalb, das heißt unterhalb des Ist-Speicherdruckes liegen. In diesem Fall wird während des oben erwähnten Zeitversatzes nicht der tatsächliche, im Kupplungs-Hydraulikzylinder anliegende Speicherdruck, sondern vielmehr ein oberer Grenz-Druck des Messbereiches aus dem Drucksensor ausgelesen. Bei der obigen Konstellation ist also die vom Drucksensor erfassbare Ist-Druckabnahme, bei der der Kupplungsdruck bis auf den Umgebungsdruck fällt, identisch mit dem maximalen Drucksensor-Messbereich.

Wie oben erwähnt, steuert die elektronische Steuereinheit des Hydrauliksystems bei Erkennen eines Druckspeicher-Ladebedarfs die Hydraulikpumpe mit einer Lade-Drehzahl an, um den Speicherdruck im Hydrauliksystem zu erhöhen, das heißt aufzuladen. Die Hydraulikpumpe kann drehzahlgeregelt sein, das heißt durch Anpassung (Erhöhung oder Reduzierung) der Ist-Stromaufnahme auf eine vorbestimmte Soll-Drehzahl geregelt werden. Hierzu kann der Elektromotor der Hydraulikpumpe eine Drehzahl-Messeinrichtung sowie eine Stromaufnahme-Messeinrichtung aufweisen, die zusammen mit der elektronischen Steuereinheit einen Regelkreis bilden.

Für den Fall, dass der Hydraulikpumpe kein eigener Volumenmesser zugeordnet ist, kann jedoch im Pumpen-Ladebetrieb keine zuverlässige Aussage über den tatsächlich von der Hydraulikpumpe geförderten Ist-Fördervolumenstrom getroffen werden, wodurch bei einer Fehlfunktion der Hydraulikpumpe die Betriebssicherheit des Hydrauliksystems beeinträchtigt ist.

Vor diesem Hintergrund kann die Steuereinheit ein Diagnosemodul aufweisen, mit dem ohne zusätzlichen Volumenmesser eine Fördervolumenstrom-Diagnose durchgeführt werden kann. Bei der Fördervolumenstrom-Diagnose wird in einem Diagnosezeitintervall die Hydraulikpumpe in einem Ladebetrieb mit einer Drehzahl angesteuert. Gleichzeitig wird das Steuerventil eines Hydraulik-Stellzylinders im Hydrauliksystem in eine der Durchflussstellungen angesteuert. Eine Auswerteeinheit des Diagnosemoduls ermittelt auf der Grundlage der sich im Ladebetrieb einstellenden Kolbengeschwindigkeit einen Ist-Volumenstrom und vergleicht diesen mit einem Soll-Volumenstrom. Bei signifikanter Abweichung erkennt das Diagnosemodul einen Fehlerfall.

Das Steuerventil ist zwischen zwei Durchflussstellungen verstellbar, um einen Kolben in gegenläufigen Kolbenhüben über gegenläufige Kolbenstellwege sowie Kolbengeschwindigkeiten im jeweiligen Hydraulik-Stellzylinder zu verstellen. Jeder Kolbenhub ist mit einer Hydraulikflüssigkeits-Entnahme (das heißt Schluckvolumen) aus dem Hydrauliksystem verbunden.

Bei bekannter Innengeometrie des Hydraulik-Stellzylinders kann in einfacher Weise das pro Kolbenhub entnommene Schluckvolumen berechnet werden. Aus der Kolbengeschwindigkeit im jeweiligen Kolbenhub kann somit ein aus dem Hydrauliksystem entnommener Schluckvolumenstrom ermittelt werden, der unter vordefinierten Rahmenbedingungen Rückschlüsse auf den Fördervolumenstrom der Hydraulikpumpe zulässt. Die oben erwähnte Kolbengeschwindigkeit kann sensortechnisch einfach zum Beispiel mittels eines später beschriebenen Positionssensors ermittelt werden, der die Kolbenhübe des Hydraulik-Stellzylinders erfasst.

Die Erfindung beruht auf dem Sachverhalt, dass im Hydrauliksystem sowohl die Gangsteller als auch die Kupplungen Kupplungs- und Gangsteller-Hydraulikzylinder aufweisen, die jeweils über ein zugeordnetes Kupplungsventil oder Gangstellerventil ansteuerbar ist, die als Steuerventil für die Fördervolumenstrom-Diagnose nutzbar sind. In einer einfachen technischen Umsetzung kann der für die Fördervolumenstrom-Diagnose genutzte Hydraulik-Stellzylinder ein Gangsteller-Hydraulikzylinder sein, dem als Steuerventil ein Gangstellerventil vorgelagert ist, mit dem der am Gangsteller-Hydraulikzylinder anliegende Hydraulikdruck einstellbar ist.

Um bei der Ermittlung des Fördervolumenstromes Messungenauigkeiten zu vermeiden, ist es von Relevanz, dass der im Hochdruckkreislauf im Hydraulikpfad vorherrschende Speicherdruck konstant gehalten wird. Auf diese Weise wird gewährleistet, dass während der Diagnose die Pumpen-Förderleistung nicht für einen zusätzlichen Druck-Aufbau des Speicherdruckes im Hochdruckkreislauf aufgebraucht wird. Messtechnisch besonders vorteilhaft ist es, wenn der Speicherdruck während des Diagnosezeitintervalls bei einem Umgebungsdruck liegt, das heißt der Hochdruckkreislauf drucklos geschaltet ist. Sensortechnisch günstig ist es, wenn der im Kupplungspfad angeordnete Drucksensor während der Fördervolumenstrom-Diagnose zur Erfassung des Ist-Speicherdruckes genutzt wird. In diesem Fall überwacht der Drucksensor, dass der Hochdruckkreislauf während des Diagnosezeitintervalls einen konstanten Speicherdruck aufweist bzw. bevorzugt drucklos bleibt.

Um den Speicherdruck im Hochdruckkreislauf in einfacher Weise auf einen Umgebungsdruck abzusenken, ist es bevorzugt, wenn vor dem Start des Diagnosezeitintervalls der Druckspeicher komplett entleert wird. Die Reduzierung des Ist-Speicherdruckes auf den Umgebungsdruck kann bevorzugt in einem Druckreduzier-Zeitintervall erfolgen, dass dem eigentlichen Diagnosezeitintervall zeitlich vorgelagert ist. In dem Druckreduzier-Zeitintervall ist die Hydraulikpumpe deaktiviert. Gleichzeitig wird der Hydraulik-Stellzylinder (das heißt der Gangsteller-Hydraulikzylinder) so lange durch Ansteuerung seines Steuerventils betätigt, bis aufgrund von leckagebedingter Hydraulikflüssigkeits-Entnahme sowie aufgrund von betätigungsbedingter Hydraulikflüssigkeits-Entnahme der Umgebungsdruck im Hydrauliksystem erreicht ist.

Das Vorliegen von Umgebungsdruck im Hochdruckkreis kann in betriebssicherer Weise mit Hilfe des Positionssensors ermittelt werden. Für den Fall, dass der Positionssensor trotz entsprechender (pulsierender) Ansteuerung des Steuerventils keinen Kolbenhubweg mehr detektiert, erkennt die Steuereinheit, dass im Hochdruckkreislauf ein Umgebungsdruck vorliegt.

Um während des Diagnosezeitintervalls ein möglichst genaues Messergebnis zu erhalten, ist es bevorzugt, wenn die Kolbengeschwindigkeiten einer Vielzahl von Kolbenhüben erfasst werden, und zwar bevorzugt bei unterschiedlichen Prüf-Drehzahlen der Hydraulikpumpe. Die Auswerteeinheit kann aus der Vielzahl von erfassten Daten einen Kolbengeschwindigkeits-Mittelwert bilden, aus dem sich der Ist-Fördervolumenstrom der Hydraulikpumpe berechnen lässt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Figur 1: ein Blockschaltdiagramm eines Doppelkupplungsgetriebes für ein Kraftfahrzeug mit sieben Vorwärtsgängen sowie einem Rückwärtsgang;
- Figur 2a und 2b: ein Hydrauliksystem eines Doppelkupplungsgetriebes in einem Blockschaltbild sowie grob schematisch den Aufbau eines Druckspeichers;
- Figur 3: in einem Blockschaltbild die Programmbausteine zur Druckspeicher- und Kupplungspfad-Diagnose in einem Diagnosemodul; und
- Figur 4: Diagramme, die die Druckspeicher- und Kupplungspfad-Diagnose veranschaulichen;
- Figur 5: in einem Blockschaltbild die zur Gangstellerpfad-Diagnose erforderlichen Programmbausteine in dem Diagnosemodul;
- Figur 6: Diagramme, die die Gangstellerpfad-Diagnose veranschaulichen;
- Figur 7: in einem Blockschaltbild die zur Speichervolumen-Diagnose erforderlichen Programmbausteine in dem Diagnosemodul;
- Figur 8: Diagramme, die die Speichervolumen-Diagnose veranschaulichen;
- Figur 9: in einem Blockschaltdiagramm die zur Umschaltzeitpunkt-Diagnose erforderlichen Programmbausteine in dem Diagnosemodul;
- Figur 10: in einem Blockschaltbild die zur Ventilspreizung-Diagnose erforderlichen Programmbausteine in dem Diagnosemodul;
- Figur 11: Diagramme, die die zeitlichen Verläufe während der Umschaltzeitpunkt-Diagnose und während der Ventilspreizung-Diagnose veranschaulichen;
- Figur 12: in einem Blockschaltdiagramm die zur Sicherheitsventil-Diagnose erforderlichen Programmbausteine in dem Diagnosemodul;
- Figur 13: Diagramme, die die zeitlichen Verläufe relevanter Parameter während der Sicherheitsventil-Diagnose veranschaulichen;
- Figur 14: in einem Blockschaltdiagramm die zur Fördervolumenstrom-Diagnose erforderlichen Programmbausteine in dem Diagnosemodul;
- Figur 15: Diagramme, die die zeitlichen Verläufe während der Fördervolumenstrom-Diagnose veranschaulichen; und
- Figur 16: eine Analyseeinheit, in die die in den Fehlerspeichern generierten Fehlersignale auslesbar sind.

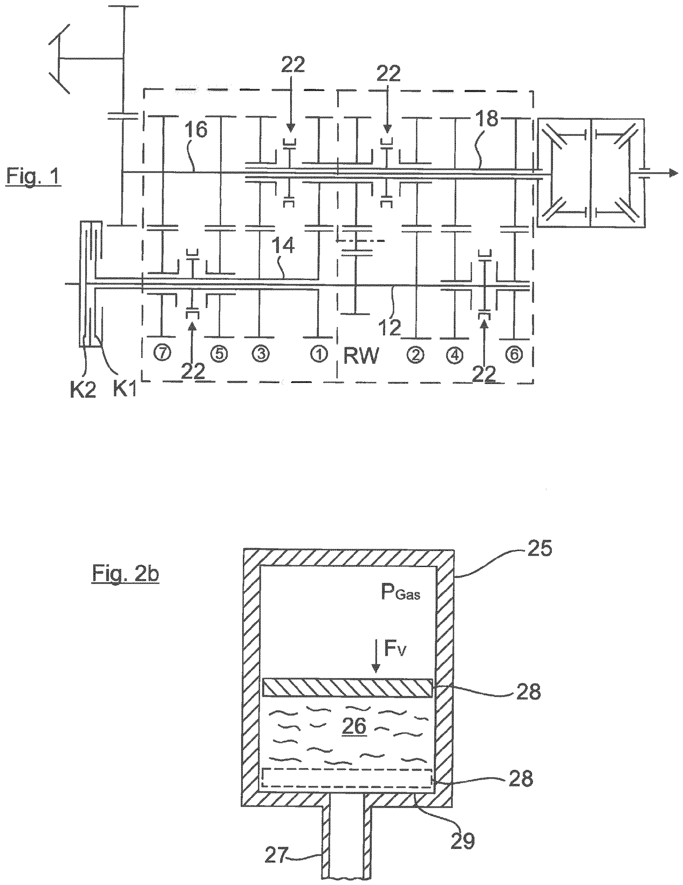

In der Fig. 1 ist in einer Prinzipdarstellung ein Doppelkupplungsgetriebe für ein Kraftfahrzeug mit Allradantrieb gezeigt. Das Doppelkupplungsgetriebe weist sieben Vorwärtsgänge (siehe die eingekreisten Ziffern 1 bis 7) sowie einen Rückwärtsgang RW auf. Das Doppelkupplungsgetriebe ist nachfolgend nur insoweit beschrieben, als es für das Verständnis der Erfindung erforderlich ist. So weist das Doppelkupplungsgetriebe zwei Eingangswellen 12, 14 auf, die koaxial zueinander angeordnet sind und über zwei hydraulisch betätigbare Lamellenkupplungen K1, K2 alternierend mit der Antriebsquelle, zum Beispiel eine Brennkraftmaschine, verbindbar sind. die Eingangswelle 14 ist als eine Hohlwelle ausgeführt, in der die als Vollwelle ausgebildete Eingangswelle 12 geführt ist. Die beiden Eingangswellen 12, 14 treiben über Zahnradsätze der Vorwärtsgänge sowie des Rückwärtsganges auf eine achsparallel angeordnete Abtriebswelle 16 und eine als Hohlwelle gebildete Zwischenwelle 18 ab. Die Zahnradsätze der Vorwärtsgänge 1 bis 7 weisen jeweils Festzahnräder und über hydraulisch betätigbare Gangsteller schaltbare Loszahnränder auf. Die Gangsteller können beispielhaft Doppelsynchronkupplungen sein, die jeweils aus einer Neutralstellung heraus zwei benachbarte Loszahnräder schalten können.

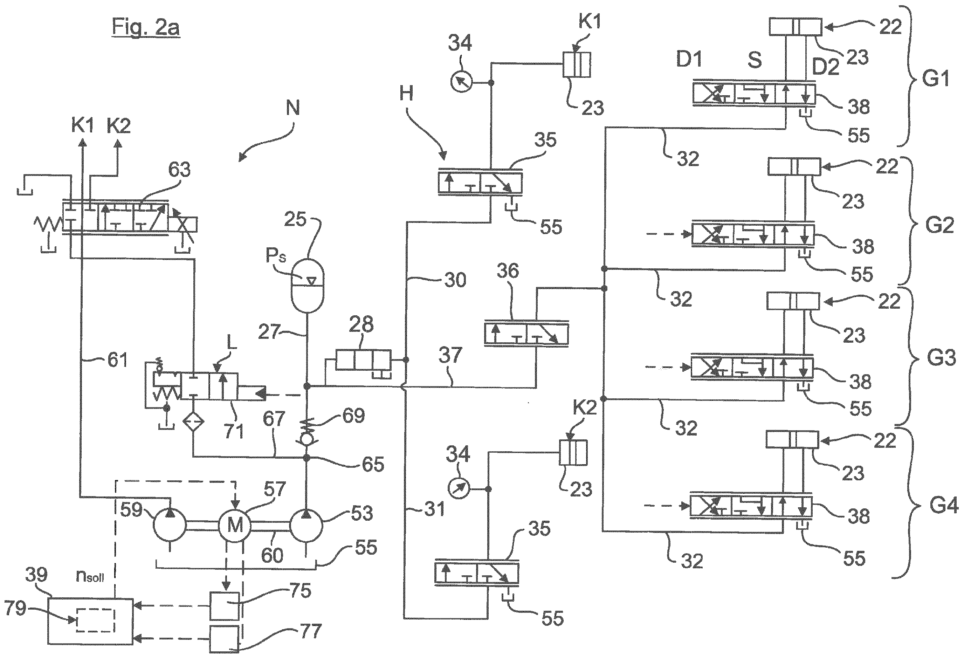

In der Fig. 2a ist das Hydrauliksystem des Doppelkupplungsgetriebes in einem stark vereinfachten Blockschaltbild dargestellt. Mit Hilfe des Hydrauliksystems werden die Hydraulikzylinder 22, 23 der Kupplungen K1, K2 sowie der Gangsteller betätigt. Das Hydrauliksystem weist gemäß der Fig. 2a einen Hochdruckkreislauf H sowie einen Niederdruckkreislauf N auf. In dem Hochdruckkreislauf H können die darin geschalteten Hydraulikzylinder 22, 23 der Kupplungen K1, K2 sowie der Gangsteller über einen Druckspeicher 25 mit einem Speicherdruck pₛ beaufschlagt werden, der in einer Größenordnung von zum Beispiel 30 bar liegen kann. Hierzu ist eine am Druckspeicher 25 angeschlossene Hauptleitung 27 über Kupplungspfade 30, 31 zu den Kupplungs-Hydraulikzylindern 23 geführt und über Gangstellerpfade 32 zu den Gangsteller-Hydraulikzylindern 22 geführt. In den Gangsteller- und Kupplungspfaden 30, 31, 32 sind jeweils Kupplung- oder Gangstellerventile 35, 38 angeordnet. Die Kupplung- oder Gangstellerventile 35, 38 sind in nicht dargestellter Weise über eine zentrale Steuereinheit 39 ansteuerbar. Zudem ist die Steuereinheit 39 mit Drucksensoren 34 signaltechnisch in Verbindung. Die Drucksensoren 34 erfassen jeweils den an der ersten Kupplung K1 und an der zweiten Kupplung K2 anliegenden Hydraulikdruck.

Das Hydrauliksystem weist zudem eine Ladepumpe 53 auf, die eingangsseitig mit einem Ölsumpf 55 verbunden ist. Die Ladepumpe 53 ist zum Aufladen des Druckspeichers 25 über einen Elektromotor 57 von der Steuereinheit 39 ansteuerbar. Zudem ist die Ladepumpe 53 zusammen mit einer Kühlpumpe 59 auf einer gemeinsamen Antriebswelle 60 angeordnet, die vom Elektromotor 57 angetrieben wird. Die Kühlpumpe 59 ist ausgangsseitig mit einer Niederdruckleitung 61 in Verbindung, die zu einem Verteilerventil 63 führt. In Abhängigkeit von der Stellung des Verteilerventiles 63 kann bei Vorliegen von Kühlbedarf die Hydraulikflüssigkeit zur ersten und/oder zweiten Kupplung K1, K2 und anschließend in den Ölsumpf 55 rückgeführt werden.

In der Fig. 2a zweigt die Hauptleitung 27 des Hochdruckkreislaufes H an einer Verzweigungsstelle 65 in eine Bypassleitung 67 ab, die mit der Niederdruckleitung 61 des Niederdruckkreislaufes N verbunden ist. Stromab der Verzweigungsstelle 65 ist ein später beschriebenes Rückschlagventil 69 angeordnet. Zudem ist in der Bypassleitung 67 ein Speicherladeventil 71 integriert. Das Speicherladeventil 71 kann in Abhängigkeit von Höhe des Speicherdruckes pₛ im Hochdruckkreislauf H zwischen in der Fig. 2a gezeigten Ladestellung L und einer Kühlstellung K verstellt werden.

Der Speicherdruck pₛ im Hochdruckkreislauf H wirkt als ein Steuerdruck, mit dem das Speicherladeventil 71 ohne zusätzliche Fremdenergie, das heißt selbsttätig, verstellbar ist. Das Speicherladeventil 71 ist dabei so ausgelegt, dass es sich in die Ladestellung L verstellt, sofern der Speicherdruck pₛ im Hochdruckkreislauf H zum Beispiel einen unteren Schwellwert, zum Beispiel 25 bar, unterschreitet. Außerdem wird das Speicherladeventil 71 selbsttätig in seine Kühlstellung K verschoben, sofern der Speicherdruck ps einen oberen Schwellwert pₘₐₓ, zum Beispiel 28 bar, überschreitet.

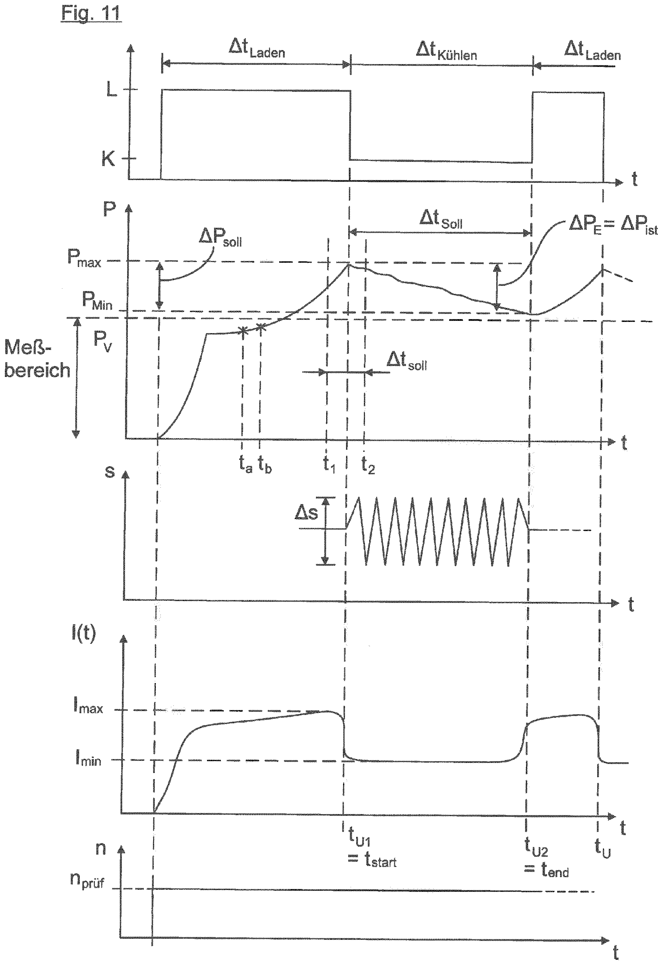

Im Fahrbetrieb kommt es durch Betätigungen der Kupplungen K1, K2 sowie der Gangsteller G1 bis G4 zu Druckverlusten. Zudem ergeben sich weitere Druckverluste durch eine Basisleckage, das heißt aufgrund von Ventilspalten oder dergleichen, im Hochdruckkreislauf H. Dadurch wird der Speicherdruck pₛ während des Fahrbetriebes reduziert. Für den Fall, dass der Speicherdruck pₛ den unteren Schwellwert pₘᵢₙ unterschreitet (das heißt es liegt ein Druckspeicher-Ladebedarf vor), verstellt sich das Speicherladeventil 71 selbsttätig in seine Ladestellung L (Fig. 2). Bei Erkennen des Druckspeicher-Ladebedarfs steuert die Steuereinheit 39 den Elektromotor 57 mit einer Lade-Solldrehzahl an. Dadurch kann die Lade-Hydraulikpumpe 53 den Druckspeicher 25 aufladen. In einem solchen Ladebetrieb arbeitet die Lade-Hydraulikpumpe 53 unter großer Pumpenlast und daher mit entsprechend großer Ist-Stromaufnahme Iₘₐₓ (Fig. 11). Überschreitet der Speicherdruck pₛ den oberen Schwellwert pₘₐₓ (Fig. 11), das heißt es liegt kein Druckspeicher-Ladebedarf mehr vor, so stellt sich das Speicherladeventil 71 selbsttätig in seine Kühlstellung K. In der Kühlstellung K fördert die Lade-Hydraulikpumpe 53 über die nunmehr geöffnete Bypassleitung 67 Hydrauliköl in den Niederdruckkreislauf N. Gleichzeitig ist der Hochdruckkreislauf H über das Rückschlagventil 69 druckdicht geschlossen. Entsprechend arbeitet die Lade-Hydraulikpumpe 53 nicht mehr mit hoher, sondern mit einer reduzierten Pumpenlast sowie entsprechend geringer Ist-Stromaufnahme Iₘᵢₙ (Fig. 11).

Wie oben erwähnt, steuert die Steuereinheit 39 bei Erkennen eines Druckspeicher-Ladebedarfs den Elektromotor 57 mit einer Lade-Solldrehzahl an. Zum Erkennen eines solchen Druckspeicher-Ladebedarfs ist erfindungsgemäß auf einen Drucksensor im Hochdruckkreislauf H oder einem Lagesensor im Speicherladeventil 71 verzichtet. Anstelle dessen weist die Steuereinheit 39 eine Auswerteeinheit auf. Die Auswerteeinheit ist signaltechnisch in Verbindung mit einer in der Motoransteuerung integrierten Strommesseinrichtung 75, die eine Ist-Stromaufnahme Iᵢₛₜ des Elektromotors 57 erfasst, und mit einem Drehzahlsensor 77, der eine Ist-Drehzahl nᵢₛₜ des Elektromotors 57 erfasst.

In der Fig. 2b ist der grundsätzliche Aufbau sowie die Funktionsweise des Druckspeichers 25 ersichtlich. Demzufolge ist der Druckspeicher 25 eine Kolben-Zylinder-Einheit mit einer, mit den Hydraulikleitungen 27, 31, 32 verbundenen Ölkammer 26 und einem vorgespannten Druckkolben 27. Die Vorspannung wird hier beispielhaft durch einen Gasdruck erzielt, der am Druckkolben 27 anliegt. Alternativ kann die Vorspannung auch durch eine Feder erzielt werden. Bei vollständig entleerter Ölkammer 26 wird der Druckkolben 27 (in der Fig. 2b in gestrichelter Linie angedeutet) mit einer Vorspannkraft F_{V} gegen einen Anschlag 29 des Druckspeichers 25 gedrückt. Das heißt, dass bei einem Befüllvorgang zur Überwindung der Vorspannkraft F_{V} ein Hydraulikdruck anliegt, der größer ist als ein, mit der Vorspannkraft F_{V} korrelierender Vorspanndruck p_{V}.

In der Fig. 2b ist der Druckspeicher 25 in einem teilbefüllten Zustand gezeigt, bei dem das Hydrauliköl unter Aufbau der Vorspannkraft F_{V} mit einem Speicherdruck am Druckkolben 27 anliegt. Im vollkommen entleerten Zustand werden die Hydraulikleitungen 27, 31 nicht mittels des Druckspeichers 25 druckbeaufschlagt. Vielmehr herrscht in den Hydraulikleitungen 27, 31, 32 Umgebungsdruck p_{U} vor. Eine Betriebsbereitschaft des Automatikgetriebes ist dann gegeben, wenn sämtliche Hydraulikleitungen 27, 31, 32 mit Hydrauliköl gefüllt sind und in den Hydraulikleitungen 27, 31, 32 ein Hydraulikdruck anliegt, der größer als der Vorspanndruck p_{V} ist, und zwar um einen vorgegebenen Druckoffset, damit die Betriebsbereitschaft nicht sofort nach Abschaltung der Ladepumpe 53 aufgrund einer Basisleckage wieder verloren geht.

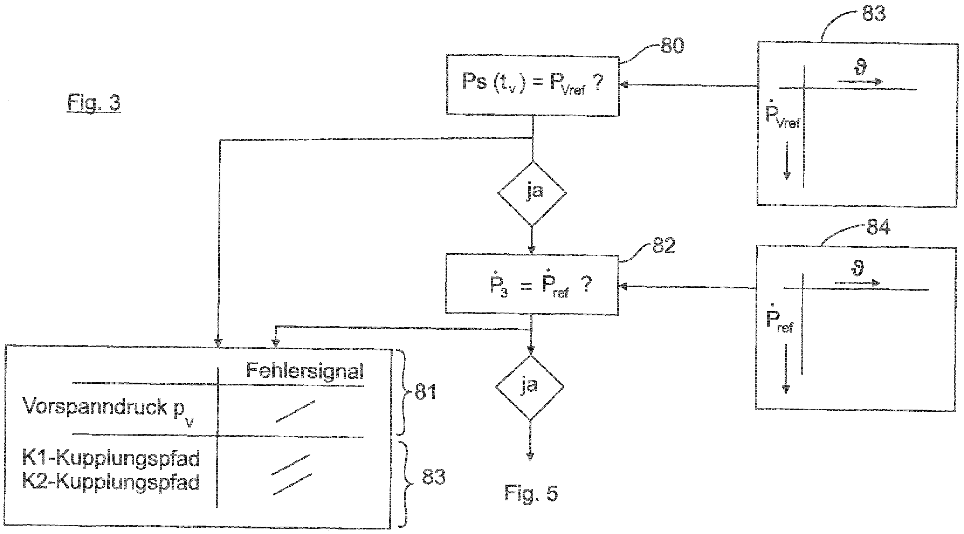

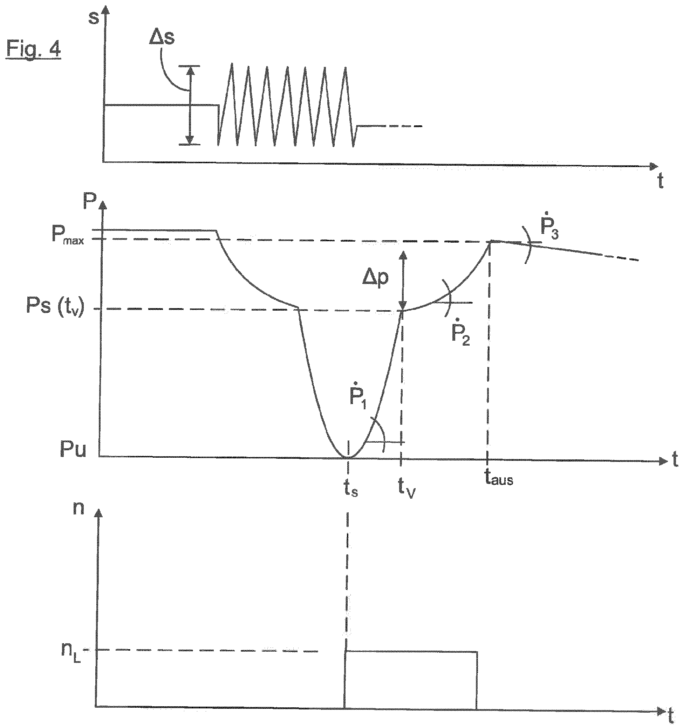

In der Figur 2a weist die Steuereinheit 39 ein Diagnosemodul 79 auf, mit dem das Ladeverhalten prüfbar ist, und zwar insbesondere der Sachverhalt prüfbar ist, ob der tatsächliche Vorspanndruck p_{V} im Druckspeicher 21 mit einem in der Spezifikation angegebenen (d.h. konstruktiv vorgegebenen) Referenz-Vorspanndruck p_{VRef} übereinstimmt. Die hierzu erforderlichen Programmbausteilen sind in der Fig. 3 skizziert. Demnach weist das Diagnosemodul 79 eine Auswerteeinheit 80 auf, mit der ein in einem Kennfeld 83 hinterlegter temperaturabhängiger Vorspanndruck p_{VRef} mit einem später beschriebenen Ist-Speicherdruck p_{S}(t_{V}) (Fig. 4) verglichen wird. Der Ist-Speicherdruck p_{S}(t_{V}) wird zu einem später beschriebenen Vorspanndruck-Zeitpunkt t_{V} vom Drucksensor 34 erfasst. Während des Diagnosebetriebs ist das Kupplungsventil 35 in einem der Kupplungspfade 30, 31 dauerhaft geöffnet, während das Kupplungsventil 35 im anderen Kupplungspfad geschlossen ist.

Bei einer einwandfreien Druckspeicher-Funktion stimmt der im Vorspanndruck-Zeitpunkt t_{V} erfasste Ist-Speicherdruck p_{S}(t_{V}) mit dem Referenz-Vorspanndruck p_{VRef} überein. Bei einer signifikanten Vorspanndruck-Abweichung stellt dagegen die Auswerteeinheit 80 einen Vorspanndruck-Fehler fest, der in einem Vorspanndruck-Fehlerspeicher 81 (Fig. 3) hinterlegt wird. Sofern festgestellt ist, dass der Druckspeicher 25 in Ordnung ist, wird mittels einer weiteren Auswerteeinheit 82 (Fig. 4) des Diagnosemoduls 79 eine später beschriebene Kupplungspfad-Diagnose durchgeführt.

Nachfolgend wird die Druckspeicher-Diagnose (d.h. Vorspanndruck-Diagnose) und die Kupplungspfad-Diagnose anhand der Fig. 3 und 4 erläutert: So wird zur Vorbereitung der Druckspeicher-Diagnose die Ölkammer 26 des Druckspeichers 25 vollständig entleert und der Ist-Speicherdruck p_{S}(t) im Hydrauliksystem auf einen Umgebungsdruck p_{U} reduziert, so dass zu einem Diagnose-Startzeitpunkt t_{S} (Fig. 4) die Druckspeicher-Diagnose beginnen kann. Die vorbeschriebene Diagnosestart-Bedingung wird durch eine Betätigung der Hydraulikzylinder 22, 23 der Kupplungen K1, K2 und der Gangsteller G1 bis G4 erzielt, wie es in dem oberen Stellweg-Diagramm der Fig. 4 angedeutet ist. Demzufolge werden die Hydraulikzylinder 22, 23 durch eine Bestromung der jeweiligen Kupplungs- oder Gangstellerventile 35, 38 solange intermittierend angesteuert, bis aufgrund der mit der Hydraulikzylinder-Betätigung verbundenen Hydraulikflüssigkeits-Entnahme der vom Drucksensor 34 erfasste Speicherdruck p_{S} auf den Umgebungsdruck p_{U} reduziert ist. Das Vorliegen eines solchen Umgebungsdruckes p_{U} kann durch den Drucksensor 34 erfasst werden. Alternativ dazu kann durch Positionssensoren 93 in den Hydraulikzylindern 22, 23 ermittelt werden, ob der jeweilige Hydraulikzylinder 22, 23 noch eine Stellweg s (Fig. 4) zurücklegt oder nicht. Falls nicht, wird daraus gefolgert, dass im Hydrauliksystem ein Umgebungsdruck p_{U} vorliegt.

Anschließend startet zum Zeitpunkt t_{S} (Fig. 4) der Diagnose-Ladebetrieb, bei dem die Hydraulik-Ladepumpe 53 mit einer konstanten Lade-Drehzahl n_{L} (Fig. 4, unteres Diagramm) angesteuert wird. Exemplarisch wird zunächst mittels des im ersten Kupplungspfad 31 angeordneten Drucksensors 34 der Ist-Speicherdruckverlauf p_{S}(t) erfasst, wie er in der Fig. 4, mittleres Diagramm wiedergegeben ist. Demzufolge erhöht sich der Speicherdruck p_{S} bis zu dem Vorspanndruck-Zeitpunkt t_{V}, bei dem der vom Drucksensor 34 erfasste Ist-Speicherdruck p_{S}(tᵥ) den Druckspeicher-Vorspanndruck p_{V} erreicht hat.

Wie oben bereits angedeutet, ist bei einer fehlerfreien Druckspeicher-Funktion der im Vorspanndruck-Zeitpunkt t_{V} erfasste Ist-Speicherdruck p_{S}(t_{V}) (unter Berücksichtigung von Temperaturabhängigkeiten) identisch mit einem Referenz-Vorspanndruck p_{VRef}. Bei einer signifikanten Abweichung zwischen dem im Vorspanndruck-Zeitpunkt t_{V} erfassten Ist-Speicherdruck p_{S}(t_{V}) und dem Referenz-Vorspanndruck p_{VRef} stellt die Auswerteeinheit 80 einen Vorspanndruck-Fehler fest. Im weiteren Diagnose-Ladebetrieb wird nach dem Vorspanndruck-Zeitpunkt t_{V} die Ölkammer 26 des Druckspeichers 25 gefüllt, und zwar unter Verstellung des Druckkolbens 27.

Wie aus der Fig. 4, mittleres Diagramm, hervorgeht, steigt im Diagnose-Ladebetrieb der Ist-Speicherdruckverlauf p_{S}(t) bis zum Erreichen des Vorspanndrucks p_{V} im Druckspeicher 25 (d.h. bis zum Vorspanndruck-Zeitpunkt t_{V}) mit einem steilen Druckgradienten ṗ₁ an. Im weiteren Verlauf (d.h. nach dem Vorspanndruck-Zeitpunkt t_{V}) steigt der Ist-Speicherdruckverlauf p_{S}(t) dagegen lediglich mit einem flacheren Druckgradienten ṗ₂ an. Diese für den Druckspeicher 25 charakteristische Ladekurve wird zur Ermittlung des Vorspanndruck-Zeitpunkts t₂ wie folgt genutzt: So erfasst die Auswerteeinheit 80 die Druckgradienten ṗ₁, ṗ₂ des Ist-Speicherdruckverlaufes p_{S}(t). Bei Erfassen einer stufenartigen Gradienten-Änderung zwischen den Druckgradienten ṗ₁ und ṗ₂ erkennt die Auswerteeinheit 80 den Vorspanndruck-Zeitpunkt t_{V}.

Sofern in der obigen Vorspanndruck-Diagnose kein Vorspanndruck-Fehler erkannt wird, erfolgt unmittelbar anschließend die Kupplungspfad-Diagnose: Hierzu wird einfach der während der Druckspeicher-Diagnose erfolgende Diagnose-Ladebetrieb fortgesetzt, bis der Drucksensor 34 einen oberen Schwellwert pₘₐₓ (Fig. 4, mittleres Diagramm) erreicht. Der obere Schwellwert pₘₐₓ liegt in der Fig. 4, mittleres Diagramm, um eine Druckdifferenz Δp über dem Vorspanndruck p_{V} des Druckspeichers 25. Nach dem Ende des Diagnose-Ladebetriebs vergleicht eine zweite Auswerteeinheit 82 einen Druckgradienten ṗ₃ des Ist-Speicherdruckverlauf p_{S}(t) mit einem Referenz-Druckgradienten ṗ_{Ref}, der temperaturabhängig in einem Kennfeld 84 (Fig. 3) im Diagnosemodul 79 hinterlegt ist. Die Auswerteeinheit 82 ermittelt aus dem Vergleich, ob ein fehlerfreier oder fehlerbehafteter leckagebedingter Druckabfall im Ist-Speicherdruckverlauf ps(t) vorliegt.

Es ist hervorzuheben, dass die Kupplungspfad-Diagnose nur unter der Bedingung erfolgt, dass die Auswerteeinheit 80 keinen Vorspanndruck-Fehler feststellt. Bei Fehlerfreiheit im Druckspeicher 25 können fehlerhafte Leckagen eindeutig dem Kupplungspfad 31 zugewiesen werden. Sowohl bei der Druckspeicher-Diagnose als auch bei der Kupplungspfad-Diagnose ist das in der Verbindungsleitung 37, die die Hauptleitung 27 mit den Gangstellerpfaden 32 verbindet, angeordnete Druckregelventil 36 geschlossen.

Zur Plausibilisierung des in der Vorspanndruck-/Kupplungspfad-Diagnose erzielten Ergebnisses kann der oben anhand des ersten Kupplungspfads 31 dargelegte Diagnosebetrieb doppelt durchgeführt werden, und zwar im Rahmen einer ersten Teildiagnose A mit Hilfe des im ersten Kupplungspfad 31 angeordneten Drucksensors 34 sowie mit dem im zweiten Kupplungspfad 32 geschlossenen Kupplungsventil 35. Anschließend kann der obige Diagnosebetrieb im Rahmen einer zweiten Teildiagnose B durchgeführt werden, und zwar mit dem im zweiten Kupplungspfad 30 angeordneten Drucksensor 34 und mit dem im ersten Kupplungspfad 31 geschlossenen Kupplungsventil 35.

Das Diagnosemodul 79 kann bei Vorliegen gleicher Fehler sowohl in der ersten Teildiagnose A als auch in der zweiten Teildiagnose B einen Druckspeicher-Fehler erkennen sowie mit großer Wahrscheinlichkeit einen Kupplungspfad-Fehler ausschließen. Bei Vorliegen unterschiedlicher Fehler-Ergebnisse kann das Diagnosemodul 79 einen Leckage-Fehler in einem der beiden Kupplungspfade 30, 31 erkennen.

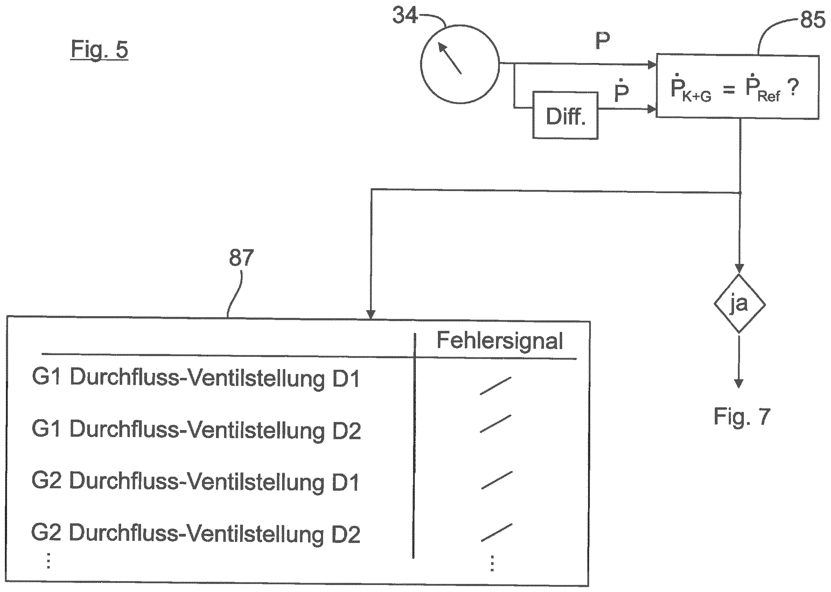

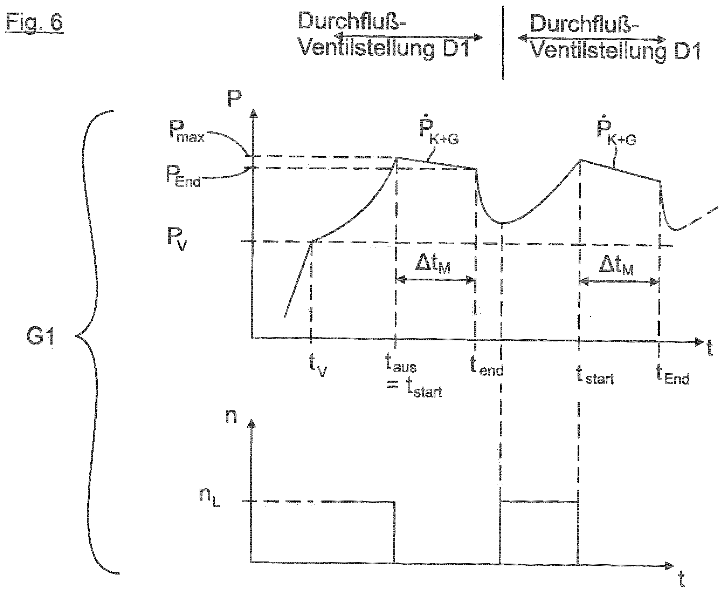

In der Figur 5 sind die für eine Gangstellerpfad-Diagnose erforderlichen Programmbausteine des Diagnosemoduls 79 in einem grob vereinfachten Blockschaltbild gezeigt. Die Gangstellerpfad-Diagnose wird als eine Folge-Diagnose zeitlich unmittelbar nach der Kupplungspfad-Diagnose (Fig. 3) durchgeführt, und zwar unter der Bedingung, dass in der Kupplungspfad-Diagnose zumindest ein Kupplungspfad 30, 31 mit fehlerfreier Leckage erkannt ist. Der Drucksensor 34 des als fehlerfrei eingestuften Kupplungspfades 30, 31 (nachfolgend als Referenz-Kupplungspfad bezeichnet) wird für die anhand der Figuren 5 und 6 veranschaulichten Gangstellerpfad-Diagnose genutzt.

Wie aus der Figur 5 hervorgeht, weist das Diagnosemodul 79 eine dritte Auswerteeinheit 85 auf, an deren Signaleingang ein vom Drucksensor 34 erfasster Ist-Speicherdruck p_{S}(t) und ein Ist-Speicherdruck-Gradient p anliegt. Mittels der Auswerteeinheit 85 wird das Leckage-Verhalten jedes der Gangstellerpfade 32 separat geprüft. Gegebenenfalls erfasste Leckage-Fehler werden in dem Fehlerspeicher 87 hinterlegt.

Nachfolgend wird anhand der Figuren 5 und 6 die Gangstellerpfad-Diagnose beschrieben: So öffnet das Diagnosemodul 79 zunächst das im Referenz-Kupplungspfad 30 angeordnete Kupplungsventil 35, um den Ist-Speicherdruckverlauf p_{S}(t) zu erfassen. Zudem wird das Druckregelventil 36 in der Verbindungsleitung 37 des Hydrauliksystems geöffnet, um zwischen dem im Referenz-Kupplungspfad 30 angeordneten Drucksensor 34 und den Gangstellerpfaden 32 eine Druckverbindung herzustellen. Anschließend erfolgt ein Diagnose-Ladebetrieb durch Aktivierung der Lade-Hydraulikpumpe 53. Im Diagnose-Ladebetrieb wird der Ist-Speicherdruck p_{S}(t) bis auf den oberen Schwellwert pₘₐₓ (Figur 6) zum End-Zeitpunkt tₐᵤₛ erhöht. Nach dem Ende des Diagnose-Ladebetriebs, das heißt zum End-Zeitpunkt tₐᵤₛ (Figur 6), erfasst der Drucksensor 34 während eines Meßzeitintervalls Δt_{M} einen Druckgradienten ṗ_{K+G} des Speicherdruckverlaufes p_{S}(t). Die Auswerteeinheit 85 vergleicht den Druckgradienten ṗ_{K+G} mit einem Referenz-Druckgradienten p_{Ref} und wertet aus, ob ein fehlerfreier oder fehlerbehafteter Druckabfall (das heißt eine Gangsteller-Leckage) im Speicherdruckverlauf p_{S}(t) vorliegt.

Wie in der Figur 2a gezeigt, ist jedes der in den Gangstellerpfaden 32 angeordneten Gangstellerventile 35 zwischen einer Sperr-Ventilstellung S und zwei Durchfluss-Ventilstellungen D1, D2 verstellbar. Die Gangstellerpfad-Diagnose erfolgt im zu prüfenden Gangstellerpfad 32 für jede der Durchfluss-Ventilstellungen D1 und D2 separat. Das heißt, dass in jedem Gangstellerpfad 32 die Gangsteller-Diagnose sowohl in der ersten Durchfluss-Ventilstellung D1 des Gangstellerventils 38 als auch in der zweiten Durchfluss-Ventilstellung D2 des Gangstellerventils 38 durchgeführt wird. Die Gangstellerventile 38 in den verbleibenden Gangstellerpfaden 32 bleiben dagegen in die Sperr-Ventilstellung S geschaltet, um die Meßgenauigkeit bei der Diagnose des zu prüfenden Gangstellerpfads 32zu erhöhen. Der im Meßzeitintervall Δt_{M} vom Drucksensor 34 erfasste Druckgradient ṗ_{K+G} gibt daher den gemeinsamen Druckabbau sowohl im Referenz-Kupplungspfad 30 als auch im zu prüfenden Gangstellerpfad 32 wieder, dessen Gangstellerventil 38 in eine der beiden Durchflußstellungen D1, D2 geschaltet ist.

Der Referenz-Druckgradient p_{Ref} wird aus einer Kennfeld-Datenbank gelesen, z.B. aus der bereits in der Figur 3 gezeigten Kennfeld-Datenbank 83. In diesem Fall würde der auslesbare Referenz-Druckgradient p_{Ref} einer fehlerfreien Basisleckage des Referenz-Kupplungspfades 30 entsprechen. In der Auswerteeinheit 85 werden nicht nur die Druckgradienten ṗ_{K+G} erfasst, sondern zusätzlich auch Absolut-Druckwerte, das heißt der Ist-Speicherdruck p_{S}(t_{Start}) zum Startzeitpunkt t_{Start} als auch der Ist-Speicherdruck p_{S}(t_{End}) zum Mess-Endzeitpunkt t_{End} des Messzeitintervalls Δt_{M}. In diesem Fall erkennt die Auswerteeinheit 85 einen fehlerfreien Gangstellerpfad 32, wenn die Bedingungen erfüllt sind, dass erstens eine ausreichend große Speicherdruckdifferenz zwischen dem Start- und Endzeitpunkt t_{Start}, t_{End} vorliegt und dass zweitens der Druckgradient ṗ_{K+G} dem Referenz-Druckgradienten p_{Ref} entspricht.

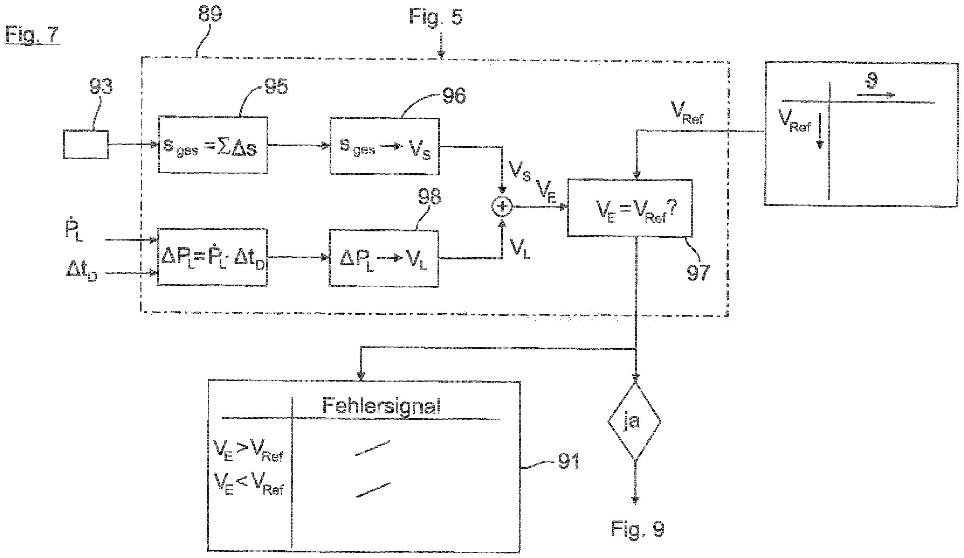

In der Figur 7 sind die für eine Speichervolumen-Diagnose erforderlichen Programmbausteine des Diagnosemoduls 79 in einem grob vereinfachten Blockschaltbild gezeigt. Die Speichervolumen-Diagnose wird als eine Folge-Diagnose zeitlich unmittelbar nach der Gangsteller-Diagnose (Figuren 5 und 6) durchgeführt, und zwar unter der Bedingung, dass in der Gangsteller-Diagnose zumindest ein Gangstellerpfad 32 der Gangsteller G1 bis G4 als fehlerfrei erkannt ist und somit für die Speichervolumen-Diagnose als ein Referenz-Gangstellerpfad nutzbar ist.

Wie aus der Figur 7 hervorgeht, weist das Diagnosemodul 79 eine Auswerteeinheit 89 auf, die in einem Vergleicher-Baustein 97 eine bei der Speichervolumen-Diagnose ermittelte Hydraulikflüssigkeits-Entnahme V_{E} mit einem Referenz-Speichervolumen V_{ref} vergleicht. Bei Vorliegen einer signifikanten Abweichung wird ein Speichervolumen-Fehler erkannt und im Fehlerspeicher 91 abgespeichert. Das Referenz-Speichervolumen V_{ref} ist aus einem Speichervolumen-Kennfeld einer Datenbank auslesbar, in dem die Referenzwerte temperaturabhängig hinterlegt sind.

Wie aus der Figur 7 weiter hervorgeht, ist die Auswerteeinheit 89 in Signalverbindung mit einem Positionssensor 93 des im Referenz-Gangstellerpfad 32 angeordneten Gangsteller-Hydraulikzylinders 22. Während der Speichervolumen-Diagnose wird das Gangstellerventil 38 im Referenz-Gangstellerpfad 32 angesteuert, wobei der Positionssensor 93 die Stellwege Δs des Gangsteller-Hydraulikzylinders 22 erfasst. Diese werden in einem Stellweg-Integrator 95 zu einem Gesamt-Stellweg s_{ges} aufintegriert. Der Gesamt-Stellweg s_{ges} wird in einem Wandler-Baustein 96 in ein Gesamt-Schluckvolumen V_{S} umgerechnet. Zu dem Gesamt-Schluckvolumen V_{S} wird ein während der Speichervolumen-Diagnose abfließendes Hydraulikflüssigkeits-Leckagevolumen V_{L} addiert. Die sich daraus ergebende Hydraulikflüssigkeits-Entnahme V_{E} wird zum oben erwähnten Vergleicher-Baustein 97 geleitet.

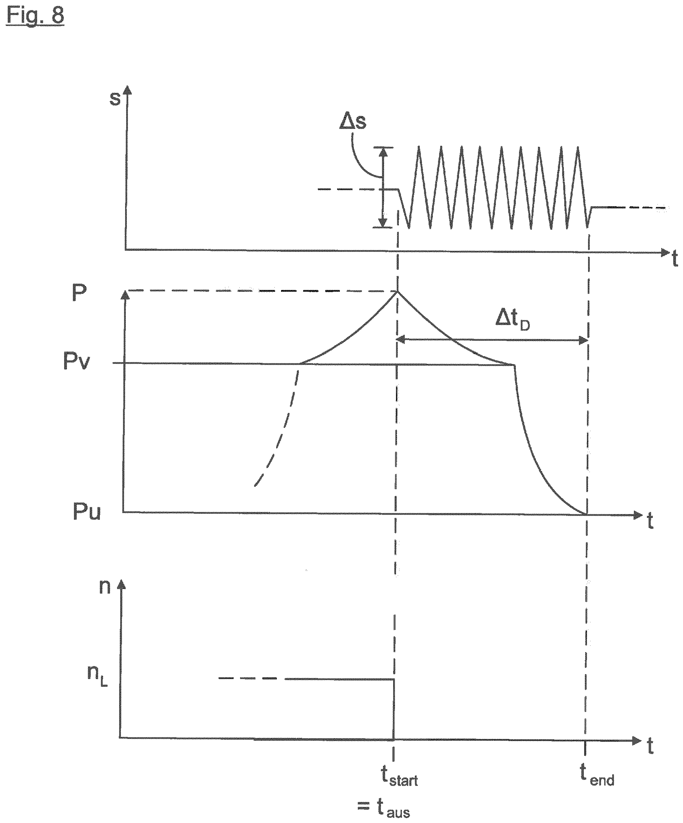

Die Speichervolumen-Diagnose wird wie folgt durchgeführt: Zunächst wird der Druckspeicher 25 in einem Diagnose-Ladebetrieb komplett mit Hydraulikflüssigkeit gefüllt. Der Diagnose-Ladebetrieb ist ein Blindladevorgang, der in einer bestimmten Zeit t erfolgt. Anschließend wird ab einem Start-Zeitpunkt tₛₜₐᵣₜ (stimmt in der Fig. 8 mit dem Ausschalt-Zeitpunkt tₐᵤₛ überein) der Referenz-Hydraulikzylinder 22 in einem Diagnose-Zeitintervall Δt_{D} so lange intermittierend betätigt, bis aufgrund der aus dem Hydrauliksystem genommenen Leckage- und Schluckvolumina V_{L} und V_{S} ein Umgebungsdruck p_{U} im Hydrauliksystem vorliegt. Der Umgebungsdruck p_{U} wird nicht über einen Drucksensor gemessen, sondern indirekt im Diagnosemodul 79 erkannt, und zwar zu dem End-Zeitpunkt t_{end} (Fig. 8) des Diagnose-Zeitintervall Δt_{D}, zu dem der Positionssensor 93 trotz Durchfluss-Ventilstellung D1, D2 des Referenz-Steuerventils 35 keinen Stellweg Δs mehr erfasst wird.

Während der Druckspeichervolumen-Diagnose ist einer der Kupplungspfade 30, 31 als Referenz-Kupplungspfad sowie der zum Referenz-Hydraulikzylinder 22 führende Referenz-Gangstellerpfad 32 mit dem im Hydrauliksystem vorherrschenden Speicherdruck p_{S} beaufschlagt. Die Hydraulikzylinder 22 der anderen Gangstellerpfade 32 sowie des anderen Kupplungspfads sind dagegen vom Speicherdruck p_{S} entkoppelt.

Die Ermittlung des Leckagevolumens V_{L} kann auf der Grundlage der bei den vorangegangenen Diagnosen erfassten Druckgradienten am Kupplungspfad 30 sowie am Referenz-Gangsteller 22 erfolgen (z.B. der Druckgradient ṗ_{K+G} aus der Gangstellerpfad-Diagnose gemäß den Fig. 5 und 6). Der Druckgradient ṗ_{L} wird in der Auswerteeinheit 89 mit dem Diagnose-Zeitintervall Δt_{D} multipliziert. Die so erhaltene Druckdifferenz Δp_{L} wird in einem Wandler 98 in das Leckagevolumen V_{L} umgewandelt.

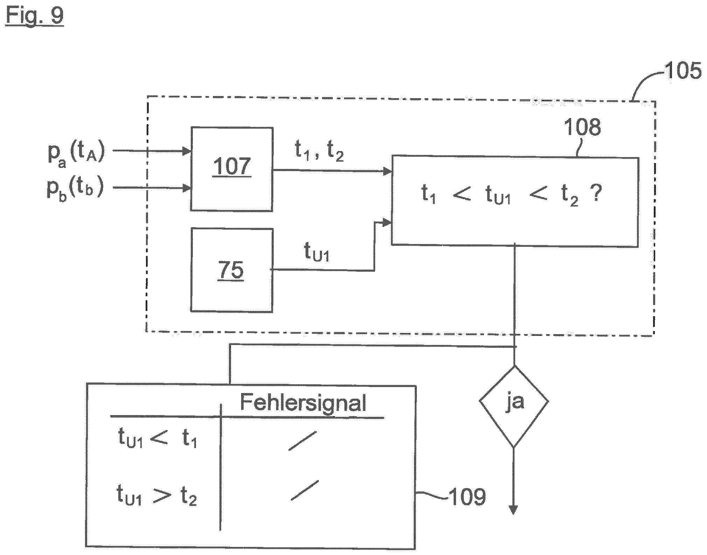

In der Figur 9 sind die für eine Umschaltzeitpunkt-Diagnose am Speicherladeventil 71 erforderlichen Programmbausteine des Diagnosemoduls 79 in einem grob vereinfachten Blockschaltbild gezeigt. Die Umschaltzeitpunkt-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 9 hervorgeht, weist das Diagnosemodul 79 eine Auswerteinheit 105 auf, mit der im Rahmen der Umschaltzeitpunkt-Diagnose geprüft wird, ob ein erster Umschaltzeitpunkt t_{U1}, zu dem das Speicherladeventil 71 selbsttätig von seiner Ladestellung L in seine Nichtladestellung K schaltet, sowie ein zweiter Umschaltzeitpunkt t_{U2}, zu dem das Speicherladeventil 71 selbsttätig von seiner Nichtladestellung K in seine Ladestellung schaltet, plausibel ist. Hierzu ermittelt die Auswerteeinheit 105, ob zum ersten Umschaltzeitpunkt t_{U1} der Ist-Speicherdruck p_{S}(t) im Bereich des oberen Druckschwellwertes pₘₐₓ liegt. Zudem ermittelt die Auswerteeinheit 105, ob der zum zweiten Umschaltzeitpunkt t_{U2} der Ist-Speicherdruck p_{S}(t) im Bereich des unteren Druckschwellwerts pₘᵢₙ liegt.

Zur Erfassung der beiden Umschaltzeitpunkt t_{U1} und t_{U2} wird die Strommesseinrichtung 75 des Elektromotors 57 genutzt. Die Strommesseinrichtung 75 erfasst eine Ist-Stromaufnahme I(t) des Elektromotors 57. Dabei legt die Steuereinheit 39 einen Wechsel-Zeitpunkt von einer hohen Stromaufnahme Iₘₐₓ zu einer niedrigen Stromaufnahme Iₘᵢₙ als ersten Umschaltzeitpunkt t_{U1} fest. Ein Wechsel-Zeitpunkt von der niedrigen Stromaufnahme Iₘᵢₙ zur hohen Stromaufnahme Iₘₐₓ wird als zweiter Umschaltzeitpunkt t_{U2} festgelegt.

Zur Erfassung des Ist-Speicherdruckes p_{S}(t) wird der Kupplungspfad-Drucksensor 34 genutzt. Dessen Messbereich Δpₘₑₛₛ (Figur 11) liegt in der Figur 11 außerhalb, das heißt unterhalb der Druckschwellwerte pₘₐₓ und pₘᵢₙ. Eine unmittelbare Erfassung des Ist-Speicherdruckes p_{S} zu den beiden Umschaltzeitpunkten t_{U1} und t_{U2} ist somit nicht möglich, da der Ist-Speicherdruck zu den beiden Umschaltzeitpunkten außerhalb des Messbereiches Δpₘₑₛₛ liegt.

In der Figur 9 erfolgt die Ermittlung des Ist-Speicherdruckes p_{S}(t) zu den Umschaltzeitpunkten t_{U1} und t_{U2} durch Abschätzung, und zwar mit Hilfe eines Extrapolier-Bausteins 107. Im Extrapolier-Baustein 107 wird auf der Grundlage gemessener Druckwerte pₐ(tₐ) und p_{b}(t_{b}) im SpeicherdruckVerlauf die noch innerhalb des Drucksensor-Messbereiches (Δpₘₑₛₛ) liegen, ein Zeitfenster Δtₛₒₗₗ abgeschätzt. Innerhalb des Zeitfensters Δtₛₒₗₗ liegt bei einwandfreiem Speicherladeventil-Betrieb der erste Umschaltzeitpunkt t_{U1}. Das Zeitfenster Δtₛₒₗₗ wird in der Figur 9 und 11 durch die beiden Zeitpunkte t₁ und t₂ begrenzt. Im nachgeschalteten Vergleicherbaustein 108 wird ermittelt, ob der erste Umschaltzeitpunkt t_{U1} innerhalb oder außerhalb des Zeitfensters Δtₛₒₗₗ liegt. Sofern der erste Umschaltzeitpunkt t_{U1} außerhalb des Zeitfensters Δtₛₒₗₗ liegt, wird ein Fehlerfall erkannt und dieser in dem Fehlerspeicher 109 hinterlegt.

In der Figur 9 ist in den Programmbausteinen lediglich eine Teildiagnose gezeigt, bei der geprüft wird, ob der erste Umschaltzeitpunkt t_{U1} im Zeitfenster Δtₛₒₗₗ liegt oder nicht. In gleicher Weise prüft die Auswerteeinheit 105, ob der zweite Umschaltzeitpunkt t_{U2} innerhalb eines abgeschätzten Zeitfensters liegt oder nicht.

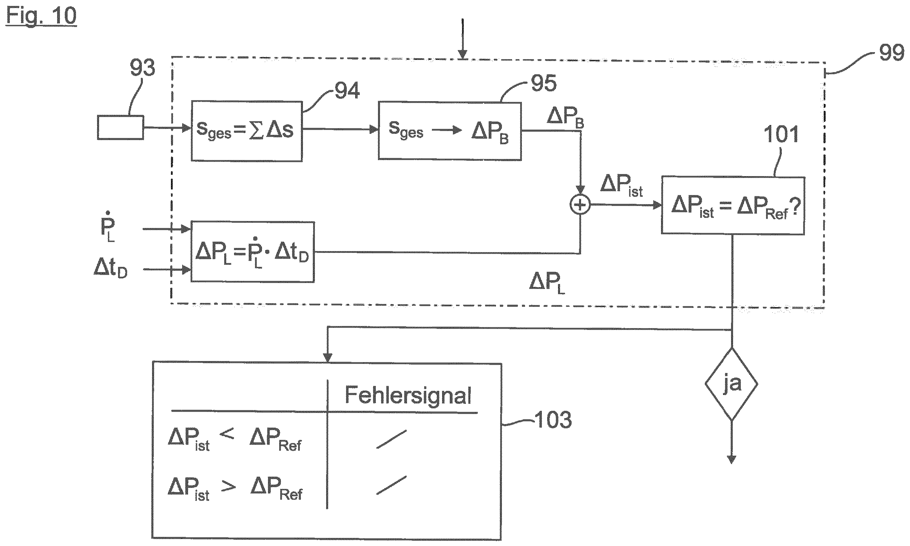

In der Figur 10 sind die für eine Ventilspreizung-Diagnose erforderlichen Programmbausteine des Diagnosemoduls 79 in einem grob vereinfachten Blockschaltbild gezeigt. Die Ventilspreizung-Diagnose wird als eine Folge-Diagnose zeitlich unmittelbar nach der Umschaltzeitpunkt-Diagnose (Figur 9) durchgeführt, und zwar unter der Bedingung, dass in der Umschaltzeitpunkt-Diagnose zumindest ein plausibler Umschaltzeitpunkt t_{U1} des Ladespeicherventils 71 erkannt worden ist.

Das Diagnosemodul 79 weist in der Fig. 10 eine Auswerteeinheit 99 auf, die bei der Ventilspreizung-Diagnose eine Ist-Ventilspreizung Δpᵢₛₜ zwischen dem unteren und dem oberen Druckschwellwert pₘᵢₙ und pₘₐₓ ermittelt. Ein Vergleicherbaustein 101 der Auswerteeinheit 99 vergleicht die Ist-Ventilspreizung Δpᵢₛₜ mit einer Soll-Ventilspreizung Δp_{Ref}. Bei Vorliegen einer signifikanten Abweichung wird ein Fehlerfall erkannt und in dem Fehlerspeicher 103 hinterlegt.

Zur Ermittlung der Ist-Ventilspreizung Δpᵢₛₜ legt die Auswerteeinheit 99 ein Diagnosezeitintervall Δt_{D} fest. Das Diagnosezeitintervall Δt_{D} startet mit dem ersten Umschaltzeitpunkt t_{U1} und endet mit dem folgenden zweiten Umschaltzeitpunkt t_{U2}. Innerhalb des oben definierten Diagnosezeitintervalls Δt_{D} aktiviert das Diagnosemodul 79 einen Referenz-Hydraulikzylinder 22, der gemäß der Figur 11 während des Diagnosezeitintervalls Δt_{D} permanent, d.h. intermittierend, hin- und her verstellt wird. Durch die Betätigung des Referenz-Hydraulikzylinders 22 und durch eine systemimmanente Hydrauliksystem-Leckage erfolgt während des Diagnosezeitintervalls Δt_{D} eine Speicherdruck-Abnahme Δp_{E}, die der Ist-Ventilspreizung Δpᵢₛₜ entspricht.

Die Ermittlung der Speicherdruck-Abnahme Δp_{E}, das heißt der Ist-Ventilspreizung Δpᵢₛₜ, erfolgt anhand der in der Figur 10 gezeigten Programmbausteine: Demzufolge werden vom Positionssensor 93 die Kolben-Stellwege Δs während des Diagnosezeitintervalls Δt_{D} in einem Integrator 94 zu einem Gesamt-Stellweg s_{ges} aufintegriert. Daraus wird in einem Wandler-Baustein 95 die mit der Gangsteller-Betätigung verbundene Druckabnahme Δp_{B} berechnet. Die mit der Gangsteller-Betätigung verbundene Druckabnahme Δp_{B} wird in einem Summierglied mit der leckagebedingten Druckabnahme Δp_{L} addiert, woraus sich die Speicherdruck-Abnahme Δp_{E} während des Diagnosezeitintervalls Δt_{D} ergibt. Die leckagebedingte Druckabnahme Δp_{L} des Referenz-Hydraulikzylinders 22 ist bereits bei vorangegangenen Diagnosen ermittelt worden.

Wie aus der Figur 2a hervorgeht, ist den beiden Kupplungspfaden 30, 31 ein von der elektronischen Steuereinheit 39 ansteuerbares Sicherheitsventil 28 vorgeschaltet. Das Sicherheitsventil 28 kann zwischen einer Schließstellung und einer Durchflussstellung betätigt werden. In der Schließstellung sind die beiden Kupplungspfade 30, 31 vom Druckspeicher 25 druckentkoppelt. In der Durchflussstellung sind die beiden Kupplungspfade 30, 31 mit dem Speicherdruck p_{S} beaufschlagbar. Sofern die Steuereinheit 39 eine Fehlfunktion des Kupplungsventils 35 in zumindest einem der Kupplungspfade 30, 31 erfasst, kann aus Sicherheitsgründen das Sicherheitsventil 28 in seine Schließstellung verstellt werden. Im normalen Fahrbetrieb ist das Sicherheitsventil 28 permanent in seiner Durchflussstellung.

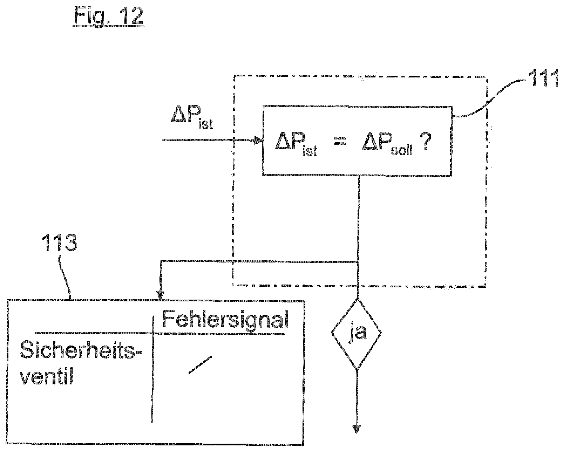

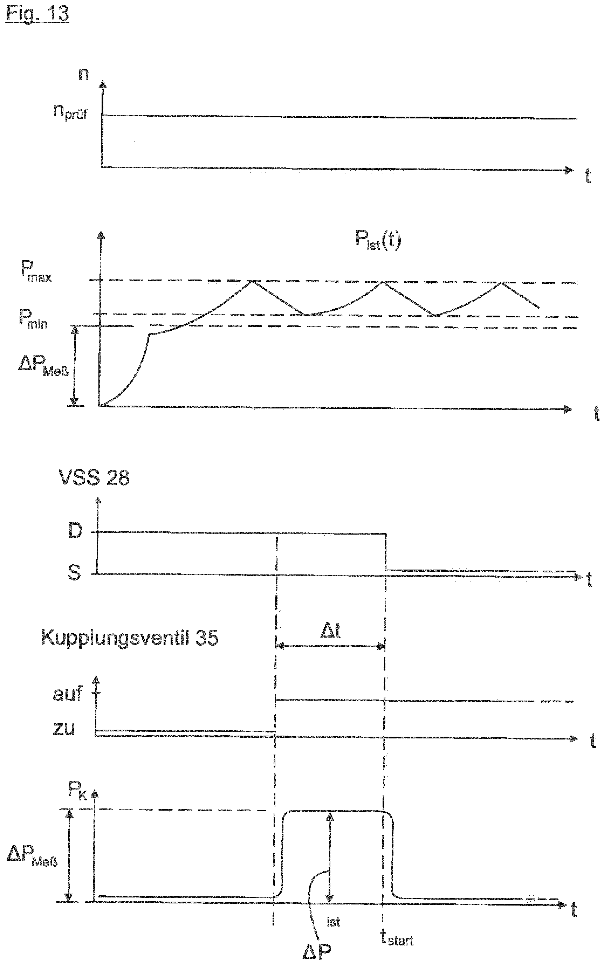

In der Figur 12 sind die für eine Sicherheitsventil-Diagnose erforderlichen Programmbausteine des Diagnosemoduls 79 in einem vereinfachten Blockschaltbild gezeigt. Die Sicherheitsventil-Diagnose kann unabhängig von anderen Diagnoseschritten durchgeführt werden. Bei der Sicherheitsventil-Diagnose wird das Sicherheitsventil 28 zu einem Diagnose-Startzeitpunkt t_{Start} (Figur 13) von der Durchflussstellung in die Schließstellung geschaltet, wodurch sich eine Ist-Druckabnahme Δpᵢₛₜ stromab des Sicherheitsventils 28 einstellt. Das Diagnosemodul 79 weist eine Auswerteeinheit 111 auf, die diese Ist-Druckabnahme Δpᵢₛₜ mit einer Soll-Druckabnahme Δpₛₒₗₗ vergleicht. Bei Vorliegen einer signifikanten Abweichung wird ein Fehlerfall erkannt und in einem Sicherheits-Fehlerspeicher 113 hinterlegt.

Zur Erfassung der Ist-Druckabnahme Δpᵢₛₜ kann der bereits oben erwähnte Kupplungs-Drucksensor 34 genutzt werden.

Nachfolgend wird anhand der Figur 12 und 13 die Durchführung der Sicherheitsventil-Diagnose erläutert: Für eine einwandfreie Meßgenauigkeit wird die Hydraulikpumpe 53 mit einer Konstantdrehzahl n_{prüf} angesteuert, um im Hochdruckkreislauf H einen ausreichend großen Speicherdruck p_{S} zu gewährleisten, der sich gemäß der Figur 13 zwischen den oberen und unteren Druckschwellwerten pₘₐₓ und pₘᵢₙ bewegt. Das Kupplungsventil 35 eines Referenz-Kupplungspfades 30 oder 31 wird um einen Zeitversatz Δt vor dem oben erwähnten Startzeitpunkt t_{Start} in seine Durchflussstellung verstellt, damit der Drucksensor 34 zwischen dem Kupplungsventil 35 und dem Kupplungs-Hydraulikzylinder 23 die Ist-Druckabnahme Δpᵢₛₜ erfassen kann. Während des Zeitversatzes Δt wird vom Drucksensor 34 nicht der tatsächlich am Kupplungs-Hydraulikzylinder 22 anliegende Hydraulikdruck zur Auswerteeinheit 111 (Fig. 12) ausgelesen, sondern vielmehr ein oberer Grenzdruck des Messbereiches Δpₘₑₛₛ.

Zum Diagnose-Startzeitpunkt t_{Start} wird das Sicherheitsventil 28 von seiner Durchflussstellung D in seine Schließstellung S geschaltet. Die daraus resultierende Druckabnahme pᵢₛₜ wird vom Drucksensor 34 erfasst und in der Auswerteeinheit 111 mit der Soll-Druckabnahme verglichen.

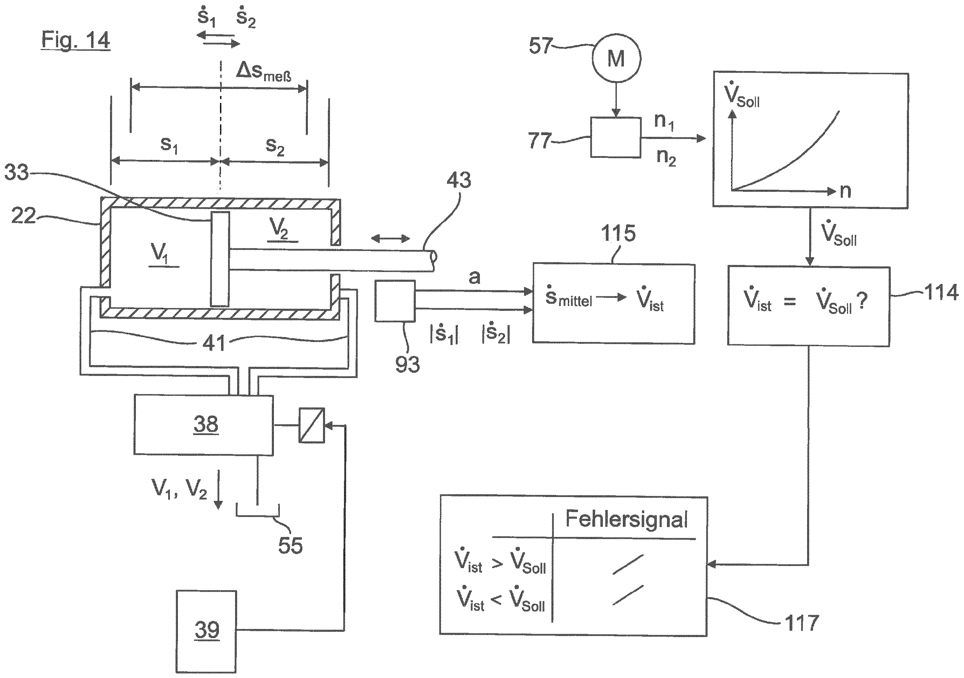

In der Figur 14 sind die für die Fördervolumenstrom-Diagnose erforderlichen Programmbausteine des Diagnosemoduls 79 in einem grob vereinfachten Blockschaltbild gezeigt. Die Fördervolumenstrom-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 14 hervorgeht, wird für die Diagnose ein Gangsteller-Hydraulikzylinder 22 genutzt, der über den Gangsteller 32 mit dem Drucksensor 25 in Verbindung ist. Dem Gangsteller-Hydraulikzylinder 22 ist ein Gangstellerventil 38 vorgelagert, das von der Steuereinheit 39 ansteuerbar ist, um einen am Gangsteller-Hydraulikzylinder 22 anliegenden Hydraulikdruck einzustellen. Das Gangstellerventil 38 ist zwischen zwei Durchflussstellungen D1, D2 verstellbar, um einen Kolben 33 in gegenläufigen Kolbenhüben über die angedeuteten Stellwege s₁, s₂ sowie mit Kolbengeschwindigkeiten ṡ₁, ṡ₂ im Hydraulik-Stellzylinder 22 zu verlagern. Der Kolben 33 unterteilt in der Figur 14 den Hydraulikzylinder in einen kolbenstangenseitigen Arbeitsraum sowie einen davon abgewandten Arbeitsraum, die beide über Hydraulik-Steuerleitungen 41 mit dem Gangstellerventil 38 in Verbindung sind. Mittels der Kolbenstange 43 des Gangsteller-Hydraulikzylinders 22 kann ein nicht gezeigter Gangsteller G1 betätigt werden. Bei einer solchen Gangsteller-Betätigung steuert die elektronische Steuereinheit 39 das Gangstellerventil 38 in an sich bekannter Weise in eine der Durchflussstellungen D1, D2, um eine Kolbenstange-Bewegung zu erzielen. Der Kolbenhub ist mit einer Hydraulikflüssigkeits-Entnahme V₁, V₂ (Schluckvolumen) aus dem Hydrauliksystem verbunden. Aufgrund der bekannten Innengeometrie des Gangsteller-Hydraulikzylinders 22 ist das jeweilige Schluckvolumen V₁, V₂ bekannt. Zudem ist ein Positionssensor 93 vorgesehen, mit dem die Kolbengeschwindigkeit ṡ₁,ṡ₂ im jeweiligen Kolbenhub erfassbar ist.

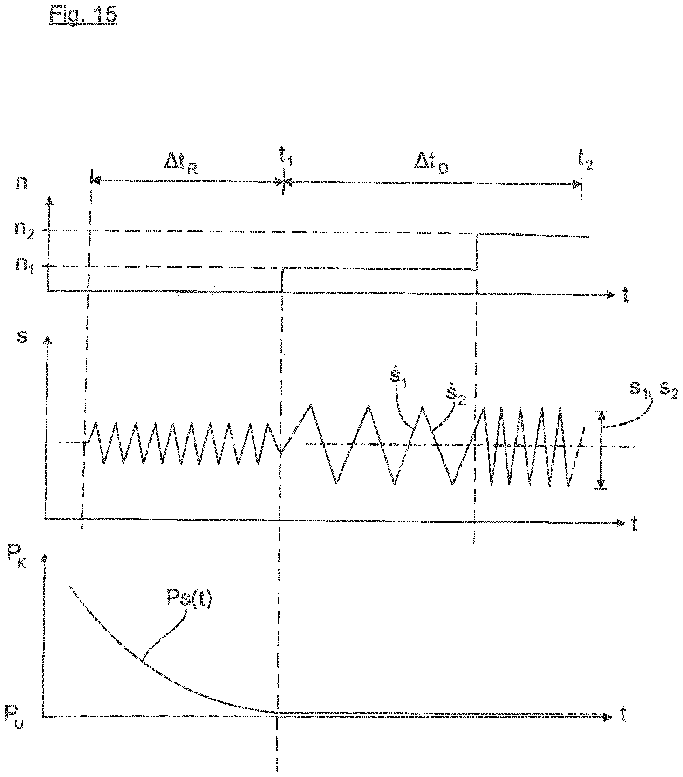

Nachfolgend wird anhand der Figuren 14 und 15 die Fördervolumenstrom-Diagnose beschrieben: So wird zunächst in einem Druckreduzier-Zeitintervall Δt_{R} (Figur 15) zunächst die Hydraulikpumpe 53 deaktiviert und gleichzeitig das Gangstellerventil 38 von der elektronischen Steuereinheit 39 intermittierend angesteuert, wie es in dem mittleren Stellweg-Diagramm der Figur 15 gezeigt ist. Im Druckreduzier-Zeitintervall Δt_{R} wird durch die Ansteuerung vom Gangstellerventil 38 der Gangsteller-Hydraulikzylinder 22 so lange hin- und herbewegt, bis aufgrund von leckagebedingter Hydraulikflüssigkeits-Entnahme und aufgrund betätigungsbedingter Hydraulikflüssigkeits-Entnahme (das heißt Schluckvolumina V₁, V₂) der Speicherdruck p_{S}(t) bis auf den Umgebungsdruck p_{U} reduziert ist. In diesem Zustand ist der Druckspeicher 25 vollständig entleert. Unmittelbar anschließend erfolgt der Start (tₛₜₐᵣₜ) eines Diagnosezeitintervalls Δt_{D}. Im Diagnosezeitintervall Δt_{D} erfolgt ein Ladebetrieb der Hydraulikpumpe 53, bei der diese mit unterschiedlichen Prüf-Drehzahlen n₁ und n₂ angesteuert werden. Gleichzeitig wird das Steuerventil 35 zwischen seinen Durchflussstellungen D1, D2 intermittierend verstellt. Dies führt dazu, dass sich der Kolben 33 im Gangsteller-Hydraulikzylinder 22 in gegenläufigen Kolbenhüben über Kolbenstellwege s₁, s₂ sowie mit Kolbengeschwindigkeiten ṡ₁, ṡ₂ im Gangsteller-Hydraulikzylinder 22 hin- und herverlagert.

Der Positionssensor 93 erfasst sowohl die einzelnen Stellwege ṡ₁, ṡ₂ je Kolbenhub sowie die Kolbengeschwindigkeiten ṡ₁, ṡ₂ je Kolbenhub. Zudem wird die Anzahl a (Fig. 14) von Kolbenhüben während des Diagnosezeitintervalls Δt_{D} erfasst. Diese Daten werden zum Signaleingang eines Wandler-Bausteins 115 geleitet, in dem eine mittlere Kolbengeschwindigkeit ṡₘᵢₜₜₑₗ aus der Anzahl a von erfassten Kolbenhüben berechnet wird. Aus der mittleren Kolbengeschwindigkeit ṡₘᵢₜₜₑₗ wird im Wandler-Baustein 115 ein Ist-Fördervolumenstrom Vᵢₛₜ berechnet. Der Ist-Fördervolumenstrom Vᵢₛₜ wird in einer signaltechnisch nachgeschalteten Auswerteeinheit 113 mit einem Soll-Fördervolumenstrom Vₛₒₗₗ verglichen, und zwar unter Berücksichtigungen der jeweiligen Prüf-Drehzahl n₁ und n₂ während des Diagnosezeitintervalls Δt_{D}. Ergibt sich in der Auswerteeinheit 113 eine signifikante Abweichung, so wird ein Fehlerfall erkannt, der in dem Fehlerspeicher 117 hinterlegt wird.

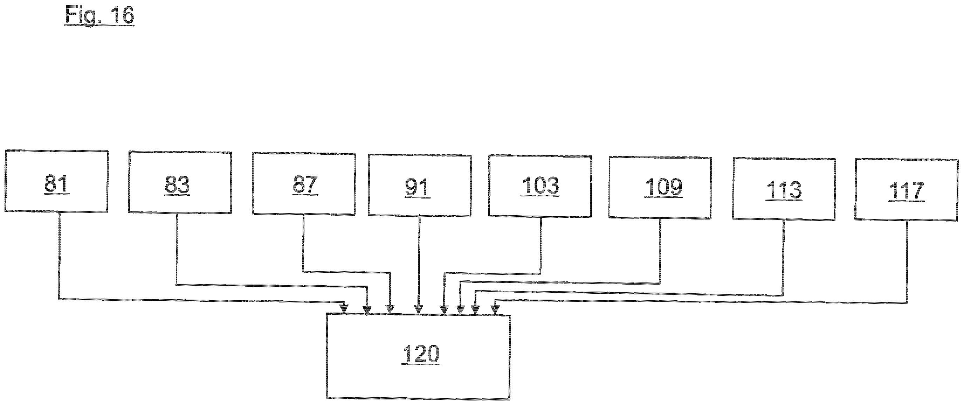

Wie aus der Fig. 16 hervorgeht, sind sämtliche Fehlerspeicher 81, 83, 87, 91, 103, 109, 117 in Signalverbindung mit einer Analyseeinheit 120, in die die in den Fehlerspeichern generierten Fehlersignale auslesbar sind. In der Analyseeinheit 120 ist eine Bewertungsmatrix hinterlegt, in der die Fehlersignale aus den Fehlerspeichern 81, 83, 87, 91, 103, 109, 117 zusammengeführt werden.

Im Hinblick auf eine umfassende Hydrauliksystem-Diagnose bewertet die Analyseeinheit 120 anhand der Bewertungsmatrix sämtliche Fehlersignale in Kombination. In der Analyseeinheit 120 erfolgt somit final eine Gegenüberstellung von Fehlersignalen mit nicht beanstandeten, d.h. fehlerfreien Funktionsdiagnosen, wodurch eine qualifizierte Bewertung der in dem Hydrauliksystem verbauten Komponenten ermöglicht ist. Die Bewertung ist ohne eine Zerlegung des Hydrauliksystems sowie ohne externe Prüfanlagen/Messtechnik ermöglicht. Auf diese Weise wird eine Verkürzung von Reparatur- und Instandsetzungszeiten, eine sichere Detektion defekter Bauteile, eine Reduzierung von Wiederholreparaturen, eine Einsparung von Analyse-Prüfstandkapazitäten durch Prüfung im verbauten Zustand (im Fahrzeug) ohne Zerlegungsaufwand möglich.

## Patentansprüche

1. Hydrauliksystem für ein Automatikgetriebe, insbesondere Doppelkupplungsgetriebe, eines Kraftfahrzeugs, mit dem Hydraulikzylinder (22, 23) zumindest einer Kupplung (K1, K2) sowie von Gangstellern (G1 bis G4) betätigbar sind, welches Hydrauliksystem einen Druckspeicher (25) zur Bereitstellung eines Speicherdrucks (ps) im Hydrauliksystem aufweist, wobei in zumindest einem vom Druckspeicher (25) zum Kupplungs-Hydraulikzylinder (23) führenden Kupplungspfad (30, 31) ein von einer elektronischen Steuereinheit (39) ansteuerbares Kupplungsventil (35), mit dem ein am Kupplungs-Hydraulikzylinder (23) anliegender Hydraulikdruck einstellbar ist, und ein Drucksensor (34) angeordnet ist, mit dem der am Kupplungs-Hydraulikzylinder (23) anliegende Hydraulikdruck erfassbar ist, und mit einer Lade-Hydraulikpumpe (53), die in einem Ladevorgang Hydraulikflüssigkeit in das Hydrauliksystem fördert, um den Ist-Speicherdruck (ps) zu erhöhen, **dadurch gekennzeichnet, dass** die Steuereinheit (39) ein Diagnosemodul (79) aufweist, mit dem eine Vorspanndruck-Diagnose durchführbar ist, bei der das Diagnosemodul (79) unter Nutzung des in dem Kupplungspfad (30, 31) angeordneten Drucksensors (34) ein Ladeverhalten, insbesondere einen Vorspanndruck (pv) des Druckspeichers (25), prüft und einen Fehlerfall erkennt, der in einem Vorspanndruck-Fehlerspeicher (81) hinterlegbar ist, wobei in zumindest einem vom Druckspeicher (25) zum Gangsteller-Hydraulikzylinder (22) führenden Gangstellerpfad (32) ein von der elektronischen Steuereinheit (39) ansteuerbares Gangstellerventil (38) angeordnet ist, mit dem der am Gangsteller-Hydraulikzylinder (22) anliegende Hydraulikdruck einstellbar ist und wobei ein Positionssensor (93) die Stellwege (As) des Gangsteller-Hydraulikzylinders (22) erfasst, wobei der Druckspeicher (25) eine mit dem Gangstellerpfad (32) verbundene Ölkammer (26) aufweist, die mittels eines vorgespannten Druckkolbens (28) beaufschlagbar ist und im Ladevorgang unter Verstellung des Druckkolbens (28) befüllbar ist, und dass mit dem Diagnosemodul (79) eine Speichervolumen-Diagnose durchführbar ist, bei der eine Auswerteeinheit (89) des Diagnosemoduls (79) ein aus den Stellwegen (As) berechneten Ist-Speichervolumen (V_{E}) des Druckspeichers (25) mit einem dem konstruktiv vorgegebenen Speichervolumen entsprechenden Referenz-Speichervolumen (V_{ref}) des Druckspeichers (25) vergleicht und bei Vorliegen einer signifikanten Abweichung einen Fehlerfall erkennt, der in einem Speichervolumen-Fehlerspeicher (91) hinterlegbar ist.

2. Hydrauliksystem nach Anspruch 1, **dadurch gekennzeichnet, dass** mit dem Diagnosemodul (79) eine Kupplungspfad-Diagnose durchführbar ist, die bevorzugt als Folge-Diagnose zeitlich nach der Vorspanndruck-Diagnose erfolgt, und dass bei der Kupplungspfad-Diagnose das Diagnosemodul (79) unter Nutzung des in dem Kupplungspfad (30, 31) angeordneten Drucksensors (34) ein Leckage-Verhalten des Kupplungspfads (30, 31) prüft und einen Fehlerfall erkennt, der in einem Kupplungspfad-Fehlerspeicher (83) hinterlegbar ist.

3. Hydrauliksystem nach einem der vorhergehenden Ansprüche, **dadurch gekennzeichnet, dass** das Diagnosemodul (79) der Steuereinheit (39) eine Gangstellerpfad-Diagnose durchführt, bei der das Diagnosemodul (79) unter Nutzung des im Kupplungspfad (30, 31) angeordneten Drucksensors (34) ein Leckage-Verhalten in einem vom Druckspeicher (25) zu einem Gangsteller-Hydraulikzylinder (22) führenden Gangstellerpfad (32) prüft, in dem ein von der elektronischen Steuereinheit (39) ansteuerbares Gangstellerventil (35) angeordnet ist, und dass mit dem Diagnosemodul (79) ein Fehlerfall erkennbar ist, der in einem Gangstellerpfad-Fehlerspeicher (87) hinterlegbar ist.

4. Hydrauliksystem nach einem der vorhergehenden Ansprüche, mit einem Niederdruckkreislauf (N) zum Kühlen der Kupplung (K1), wobei der Hochdruckkreislauf (H) und der Niederdruckkreislauf (N) zumindest die Hydraulikpumpe (53) aufweisen, die über einen Elektromotor (57) antreibbar ist, und wobei die Steuereinheit (39) bei Erkennen eines Druckspeicher-Ladebedarfs den Elektromotor (67) der Hydraulikpumpe (53) ansteuert, wobei der Hoch- und Niederdruckkreislauf (H, N) über eine Bypassleitung (57) mit integriertem Speicherladeventil (71) verbunden sind, das in einer Nichtladestellung (K) die Hydraulikpumpe (53) strömungstechnisch mit dem Niederdruckkreislauf (N) verbindet und in einer Ladestellung (L) die Hydraulikpumpe (53) strömungstechnisch mit dem Hochdruckkreislauf (H) verbindet, wobei sich das Speicherladeventil (71) zu einem ersten Umschaltzeitpunkt (t_{U1}) selbsttätig von der Ladestellung (L) in die Nichtladestellung (K) verstellt, wenn der Speicherdruck (ps) im Hochdruckkreislauf (H) einen oberen Druckschwellwert (pₘₐₓ) überschreitet, und sich zu einem zweiten Umschaltzeitpunkt (t_{U2}) selbsttätig von der Nichtladestellung (K) in die Ladestellung (L) verstellt, wenn der Speicherdruck (ps) einen unteren Druckschwellwert (pₘᵢₙ) unterschreitet, **dadurch gekennzeichnet, dass** mit dem Diagnosemodul (79) eine Ventilspreizung-Diagnose erfolgt, bei der eine Ist-Ventilspreizung (Δpᵢₛₜ) zwischen dem unteren und oberen Druckschwellwert (pₘᵢₙ, pₘₐₓ) ermittelbar ist, und dass das Diagnosemodul (79) eine Auswerteeinheit (99) aufweist, die die Ist-Ventilspreizung (Δpᵢₛₜ) mit einer Soll-Ventilspreizung (Δpₛₒₗₗ) vergleicht und bei Vorliegen einer signifikanten Abweichung einen Fehlerfall erkennt, der in einem Ventilspreizung-Fehlerspeicher (103) hinterlegbar ist.

5. Hydrauliksystem nach Anspruch 4, **dadurch gekennzeichnet, dass** die Ventilspreizung-Diagnose als eine Folgediagnose zeitlich nach einer Umschaltzeitpunkt-Diagnose erfolgt, bei der ermittelt wird, ob zum ersten Umschaltzeitpunkt (t_{U1}) der Ist-Speicherdruck (pₛ(t)) im Bereich des oberen Druckschwellwerts (pₘₐₓ) liegt, wobei ein Fehlerfall in einem Umschaltzeitpunkt-Fehlerspeicher (109) hinterlegbar ist.

6. Hydrauliksystem nach einem der vorhergehenden Ansprüche, wobei stromauf des Kupplungsventils (35) ein von der Steuereinheit (39) ansteuerbares Sicherheitsventil (24) angeordnet ist, das in einer Schließstellung (S) den Kupplungspfad (30, 31) vom Druckspeicher (25) druckentkoppelt und in einer Durchflussstellung (D) den Kupplungspfad (30, 31) mit dem Speicherdruck (ps) beaufschlagt, **dadurch gekennzeichnet, dass** mit dem Diagnosemodul (79) eine Sicherheitsventil-Diagnose durchführbar ist, bei der das Sicherheitsventil (24) zu einem Diagnose-Startzeitpunkt (t_{Start}) von der Durchflussstellung (D) in die Schließstellung (S) geschaltet wird, und zwar unter Ist-Druckabnahme (Δpᵢₛₜ) stromab des Sicherheitsventils (24), und dass eine Auswerteeinheit (111) vorgesehen ist, die die Ist-Druckabnahme (Δpᵢₛₜ) mit einer Soll-Druckabnahme (Δpₛₒₗₗ) vergleicht und bei Vorliegen einer signifikanten Abweichung einen Fehlerfall erkennt, der in einen Sicherheitsventil-Fehlerspeicher (113) auslesbar ist.

7. Hydrauliksystem nach einem der vorhergehenden Ansprüche, wobei der Druckspeicher (25) über den Gangstellerpfad (32) mit dem Gangsteller-Hydraulikzylinder (22) verbindbar ist, dem das von der Steuereinheit (39) ansteuerbare Gangstellerventil (38) vorgelagert ist, mit dem ein am Gangsteller-Hydraulikzylinder (22) anliegender Hydraulikdruck einstellbar ist, welches Gangstellerventil (38) zwischen zwei Durchflussstellungen (D1, D2) verstellbar ist, um einen Kolben (33) in gegenläufigen Kolbenhüben über gegenläufige Kolbenstellwege (s₁, s₂) sowie Kolbengeschwindigkeiten (s₁, ṡ₂) im Hydraulik-Stellzylinder (22) zu verlagern, wobei jeder Kolbenhub mit einer Hydraulikflüssigkeits-Entnahme (V₁, V₂) aus dem Hydrauliksystem verbunden ist, **dadurch gekennzeichnet, dass** die Steuereinheit (39) ein Diagnosemodul (79) aufweist, mit dem eine Fördervolumenstrom-Diagnose durchgeführt wird, bei der eine Auswerteeinheit (114) einen Ist-Fördervolumenstrom (Vᵢₛₜ) ermittelt und mit einem Soll- Fördervolumenstrom (Vₛₒₗₗ) vergleicht und bei einer signifikanten Abweichung einen Fehlerfall erkennt, der in einem Fördervolumenstrom-Fehlerspeicher (117) hinterlegbar ist.

8. Hydrauliksystem nach einem der Ansprüche 2 bis 7, **dadurch gekennzeichnet, dass** zumindest zwei, insbesondere sämtliche Fehlerspeicher (81, 83, 87, 91, 103, 109, 113, 117) in Signalverbindung mit einer Analyseeinheit (120) sind, in die die Fehlersignale auslesbar sind, und dass in der Analyseeinheit (120) eine Bewertungsmatrix hinterlegt ist, in der die Fehlersignale aus den Fehlerspeichern (81, 83, 87, 91, 103, 109, 113, 117) zusammenführbar sind, und dass für eine umfassende Hydrauliksystem-Diagnose die Analyseeinheit (120) sämtliche Fehlersignale in Kombination bewertet werden.

## Claims

1. Hydraulic system for an automatic transmission, in particular a dual-clutch transmission, of a motor vehicle, with which hydraulic cylinders (22, 23) of at least one clutch (K1, K2) and of gear selectors (G1 to G4) can be operated, which hydraulic system has a pressure accumulator (25) for providing an accumulator pressure (p_{S}) in the hydraulic system, wherein a clutch valve (35), which can be actuated by an electronic control unit (39) and by means of which a hydraulic pressure applied to the clutch hydraulic cylinder (23) can be set, and a pressure sensor (34) are arranged in at least one clutch path (30, 31) leading from the pressure accumulator (25) to the clutch hydraulic cylinder (23), by means of which pressure sensor the hydraulic pressure applied to the clutch hydraulic cylinder (23) can be detected, and comprising a charging hydraulic pump (53) which delivers hydraulic fluid into the hydraulic system in a charging process in order to increase the actual accumulator pressure (p_{S}), **characterised in that** the control unit (39) has a diagnostic module (79) with which a preload pressure diagnosis can be carried out, in which the diagnosis module (79) checks a charging behaviour, in particular a preload pressure (p_{V}) of the pressure accumulator (25), using the pressure sensor (34) arranged in the clutch path (30, 31), and detects a fault condition which can be stored in a preload pressure fault memory (81), wherein a gear selector valve (38), which can be actuated by an electronic control unit (39) and by means of which the hydraulic pressure applied to the gear selector hydraulic cylinder (22) can be set, is arranged in at least one gear selector path (32) leading from the pressure accumulator (25) to the gear selector hydraulic cylinder (22) and wherein a position sensor (93) detects the travel ranges (As) of the gear selector hydraulic cylinder (22), wherein the pressure accumulator (25) has an oil chamber (26) which is connected to the gear selector path (32) and which can be pressurised by means of a preloaded pressure piston (28) and can be filled in the charging process by adjusting the pressure piston (28), and **in that** an accumulator volume diagnosis can be carried out with the diagnostic module (79), in which an evaluation unit (89) of the diagnostic module (79) compares an actual accumulator volume (V_{E}) of the pressure accumulator (25) calculated from the travel ranges (As) with a reference accumulator volume (V_{ref}) of the pressure accumulator (25) corresponding to the accumulator volume specified by design and, in the event of a significant deviation, identifies a fault condition which can be stored in an accumulator volume fault memory (91).

2. Hydraulic system according to claim 1, **characterised in that** a clutch path diagnosis can be carried out with the diagnosis module (79), which preferably takes place as a follow-up diagnosis after the preload pressure diagnosis, and **in that**, in the clutch path diagnosis, the diagnosis module (79) checks a leakage behaviour of the clutch path (30, 31) using the pressure sensor (34) arranged in the clutch path (30, 31) and identifies a fault condition which can be stored in a clutch path fault memory (83).

3. Hydraulic system according to any one of the preceding claims, **characterised in that** the diagnostic module (79) of the control unit (39) carries out a gear selector path diagnosis in which the diagnostic module (79), using the pressure sensor (34) arranged in the clutch path (30, 31), checks a leakage behaviour in a gear selector path (32) which leads from the pressure accumulator (25) to a gear selector hydraulic cylinder (22) and in which a gear selector valve (35) which can be actuated by an electronic control unit (39) is arranged, and **in that** the diagnostic module (79) can be used to identify a fault condition which can be stored in a gear selector path fault memory (87).

4. Hydraulic system according to any one of the preceding claims, comprising a low-pressure circuit (N) for cooling the clutch (K1), the high-pressure circuit (H) and the low-pressure circuit (N) having at least the hydraulic pump (53) which can be driven via an electric motor (57), and the control unit (39) actuating the electric motor (67) of the hydraulic pump (53) when a pressure accumulator charging requirement is identified, the high-pressure and low-pressure circuits (H, N) being connected via a bypass line (57) to an integrated accumulator charging valve (71), which in a non-charging position (K) fluidically connects the hydraulic pump (53) to the low-pressure circuit (N) and in a charging position (L) fluidically connects the hydraulic pump (53) to the high-pressure circuit (H), wherein the accumulator charging valve (71) automatically adjusts from the charging position (L) to the non-charging position (K) at a first switching time (t_{U1}) if the accumulator pressure (p_{S}) in the high-pressure circuit (H) exceeds an upper pressure threshold value (pmax), and at a second switching time (t_{U2}) automatically adjusts from the non-charging position (K) to the charging position (L) if the accumulator pressure (p_{S}) falls below a lower pressure threshold value (pₘᵢₙ), **characterised in that** a valve spread diagnosis is carried out with the diagnostic module (79), in which an actual valve spread (Δpᵢₛₜ) between the lower and upper pressure threshold values (p_{min,} pₘₐₓ) can be determined, and **in that** the diagnostic module (79) has an evaluation unit (99) which compares the actual valve spread (Δpᵢₛₜ) with a set valve spread (Δpₛₒₗₗ) and, in the event of a significant deviation, identifies a fault condition which can be stored in a valve spread fault memory (103).

5. Hydraulic system according to claim 4, **characterised in that** the valve spread diagnosis is carried out as a follow-up diagnosis after a switchover time diagnosis, in which it is determined whether the actual accumulator pressure (p_{S}(t)) is in the range of the upper pressure threshold value (pₘₐₓ) at the first switchover time (t_{U1}), wherein a fault condition can be stored in a switchover time fault memory (109).

6. Hydraulic system according to any one of the preceding claims, wherein a safety valve (24) which can be actuated by the control unit (39) is arranged upstream of the clutch valve (35) and, in a closed position (S), decouples the pressure in the clutch path (30, 31) from the pressure accumulator (25) and, in a flow position (D), applies the accumulator pressure (p_{S}) to the clutch path (30, 31), **characterised in that** the diagnostic module (79) can be used to carry out a safety valve diagnosis, in which the safety valve (24) is switched from the flow position (D) to the closed position (S) at a diagnostic start time (t_{Start}), with an actual pressure decrease (Δpᵢₛₜ) downstream of the safety valve (24), and **in that** an evaluation unit (111) is provided which compares the actual pressure decrease (Δpᵢₛₜ) with a set pressure decrease (Δpₛₒₗₗ) and, in the event of a significant deviation, identifies a fault condition which can be read out in a safety valve fault memory (113).

7. Hydraulic system according to any one of the preceding claims, wherein the pressure accumulator (25) can be connected via the gear selector path (32) to the gear selector hydraulic cylinder (22), upstream of which is mounted the gear selector valve (38) which can be actuated by the control unit (39), with which a hydraulic pressure applied to the gear selector hydraulic cylinder (22) can be set, which gear selector valve (38) can be adjusted between two flow settings (D1, D2) in order to move a piston (33) in opposing piston strokes over opposing piston travel ranges (s₁, s₂) and piston speeds (s₁, ṡ₂) in the hydraulic selector cylinder (22), each piston stroke being connected to a hydraulic fluid withdrawal (V₁, V₂) from the hydraulic system, **characterised in that** the control unit (39) has a diagnostic module (79) with which a delivery volume flow diagnosis is carried out, in which an evaluation unit (114) determines an actual delivery volume flow (Vᵢₛₜ) and compares it with a set delivery volume flow (Vₛₒₗₗ) and, in the event of a significant deviation, identifies a fault condition which can be stored in a delivery volume flow fault memory (117).

8. Hydraulic system according to any one of the claims 2 to 7, **characterised in that** at least two, in particular all, fault memories (81, 83, 87, 91, 103, 109, 113, 117) are in signal connection with an analysis unit (120) into which the fault signals can be read out, and **in that** an evaluation matrix is stored in the analysis unit (120), in which matrix the fault signals from the fault memories (81, 83, 87, 91, 103, 109, 113, 117) can be combined, and **in that**, for comprehensive hydraulic system diagnosis, the analysis unit (120) evaluates all the fault signals in combination.

## Revendications

1. Système hydraulique pour une transmission automatique, en particulier une transmission à double embrayage, d'un véhicule à moteur, avec lequel des cylindres hydrauliques (22, 23) d'au moins un embrayage (K1, K2) ainsi que des sélecteurs de vitesse (G1 à G4) peuvent être actionnés, lequel système hydraulique présente un accumulateur de pression (25) pour fournir une pression d'accumulateur (p_{S}) dans le système hydraulique, dans lequel dans au moins une voie d'embrayage (30, 31) menant de l'accumulateur de pression (25) au cylindre hydraulique d'embrayage (23), une soupape d'embrayage (35) pouvant être actionnée par un dispositif de commande électronique (39), avec laquelle une pression hydraulique appliquée au cylindre hydraulique d'embrayage (23) peut être réglée, et un capteur de pression (34) est agencé, avec lequel la pression hydraulique appliquée au cylindre hydraulique d'embrayage (23) peut être détectée, et avec une pompe hydraulique de charge (53) qui transporte du fluide hydraulique dans le système hydraulique lors d'une opération de charge pour augmenter la pression d'accumulateur réelle (ps), **caractérisé en ce que** le dispositif de commande (39) présente un module de diagnostic (79), avec lequel un diagnostic de pression de précharge peut être réalisé, dans lequel le module de diagnostic (79) vérifie un comportement de charge, en particulier une pression de précharge (p_{V}) de l'accumulateur de pression (25), en utilisant le capteur de pression (34) agencé dans la voie d'embrayage (30, 31), et détecte un cas de défaut qui peut être stocké dans une mémoire de défauts de pression de précharge (81), dans lequel, dans au moins une voie de sélecteur de vitesse (32) menant de l'accumulateur de pression (25) au cylindre hydraulique de sélecteur de vitesse (22), est agencée une soupape de sélecteur de vitesse (38) pouvant être actionnée par le dispositif de commande électronique (39), avec laquelle la pression hydraulique appliquée au cylindre hydraulique de sélecteur de vitesse (22) peut être réglée, et dans lequel un capteur de position (93) détecte les courses d'actionnement (A_{S}) du cylindre hydraulique de sélecteur de vitesse (22), dans lequel
l'accumulateur de pression (25) présente une chambre d'huile (26) reliée à la voie de sélecteur de vitesse (32), qui peut être mise sous pression au moyen d'un piston de pression (28) précontraint et qui peut être remplie lors de l'opération de recharge par réglage du piston de pression (28), et **en ce qu'**avec le module de diagnostic (79), un diagnostic de volume d'accumulateur peut être réalisé, dans lequel une unité d'évaluation (89) du module de diagnostic (79) compare un volume de stockage réel (V_{E}) de l'accumulateur de pression (25) calculé à partir des courses de réglage (As) avec un volume de stockage de référence (V_{réf}) de l'accumulateur de pression (25) correspondant au volume de stockage structurellement prédéterminé et, en cas d'écart significatif, détecte un cas de défaut qui peut être enregistré dans une mémoire de défauts de volume de stockage (91).

2. Système hydraulique selon la revendication 1, **caractérisé en ce qu'**avec le module de diagnostic (79), un diagnostic de voie d'embrayage peut être réalisé, lequel est de préférence effectué comme un diagnostic de suivi à un moment après le diagnostic de pression de précharge, et **en ce que**, pendant le diagnostic de voie d'embrayage, le module de diagnostic (79) vérifie un comportement de fuite de la voie d'embrayage (30, 31) en utilisant le capteur de pression (34) agencé dans la voie d'embrayage (30, 31) et détecte un cas de défaut qui peut être stocké dans une mémoire de défauts de voie d'embrayage (83).

3. Système hydraulique selon l'une quelconque des revendications précédentes, **caractérisé en ce que** le module de diagnostic (79) du dispositif de commande (39) réalise un diagnostic de la voie de sélecteur de vitesse, dans lequel le module de diagnostic (79) vérifie, à l'aide du capteur de pression (34) agencé dans la voie d'embrayage (30, 31), un comportement de fuite dans une voie de sélecteur de vitesse (32) menant de l'accumulateur de pression (25) à un cylindre hydraulique de sélecteur de vitesse (22), dans laquelle est agencée une soupape de sélecteur de vitesse (35) pouvant être actionnée par le dispositif de commande électronique (39), et **en ce qu'**avec le module de diagnostic (79), un cas de défaut peut être détecté, lequel peut être stocké dans une mémoire de défauts de voie de sélecteur de vitesse (87).

4. Système hydraulique selon l'une quelconque des revendications précédentes, avec un circuit basse pression (N) pour le refroidissement de l'embrayage (K1), dans lequel le circuit haute pression (H) et le circuit basse pression (N) présentent au moins la pompe hydraulique (53), qui peut être entraînée via un moteur électrique (57), et dans lequel le dispositif de commande (39) active le moteur électrique (67) de la pompe hydraulique (53) lors de la détection d'un besoin de charge de l'accumulateur de pression, dans lequel les circuits haute pression et basse pression (H, N) sont reliés via une conduite de dérivation (57) à une soupape de charge d'accumulateur (71) intégrée qui, dans une position de non-charge (K), relie fluidiquement la pompe hydraulique (53) au circuit basse pression (N) et, dans une position de charge (L), relie fluidiquement la pompe hydraulique (53) au circuit haute pression (H), dans lequel la soupape de charge d'accumulateur (71) passe automatiquement de la position de charge (L) à la position de non-charge (K) à un premier temps de commutation (t_{U1}), lorsque la pression d'accumulateur (p_{S}) dans le circuit haute pression (H) dépasse une valeur de seuil de pression supérieure (pₘₐₓ), et se règle automatiquement de la position de non-charge (K) à la position de charge (L) à un second temps de commutation (tᵤ₂) lorsque la pression d'accumulateur (p_{S}) descend en dessous d'une valeur de seuil de pression inférieure (pₘᵢₙ), **caractérisé en ce qu'**un diagnostic d'écartement de soupape est effectué avec le module de diagnostic (79), dans lequel un écart de soupape réel (Δp_{réel}) entre les valeurs de seuil de pression inférieure et supérieure (pₘᵢₙ, pₘₐₓ) peut être déterminé, et **en ce que** le module de diagnostic (79) présente une unité d'évaluation (99) qui compare l'écart de soupape réel (Δp_{réel}) à un écart de soupape de consigne (Δp_{consigne}) et, en cas d'écart significatif, détecte un cas de défaut qui peut être enregistré dans une mémoire de défauts d'écartement de soupape (103).

5. Système hydraulique selon la revendication 4, **caractérisé en ce que** le diagnostic d'écartement de soupape est effectué en tant que diagnostic de suivi à un moment après un diagnostic de temps de commutation, dans lequel on détermine si, au premier temps de commutation (t_{U1}), la pression d'accumulateur réelle (pₛ(t)) se trouve dans la plage de la valeur de seuil de pression supérieure (pₘₐₓ), dans lequel un cas de défaut peut être enregistré dans une mémoire de défauts de temps de commutation (109).

6. Système hydraulique selon l'une quelconque des revendications précédentes, dans lequel une soupape de sécurité (24) pouvant être actionnée par le dispositif de commande (39) est agencée en amont de la soupape d'embrayage (35), laquelle, dans une position fermée (S), découple en pression la voie d'embrayage (30, 31) de l'accumulateur de pression (25) et, dans une position d'écoulement (D), applique la pression de l'accumulateur (p_{S}) à la voie d'embrayage (30, 31), **caractérisé en ce qu'**avec le module de diagnostic (79), un diagnostic de soupape de sécurité peut être réalisé, dans lequel la soupape de sécurité (24) est commutée de la position d'écoulement (D) à la position fermée (S) à un temps de démarrage du diagnostic (t_{début}), à savoir sous la baisse de pression réelle (Δp_{réelle}) en aval de la soupape de sécurité (24), et **en ce qu'**une unité d'évaluation (111) est prévue, laquelle compare la baisse de pression réelle (Δp_{réelle}) à une baisse de pression de consigne (Δp_{consigne}) et, en cas d'écart significatif, détecte un cas de défaut qui peut être lu dans une mémoire de défauts de soupape de sécurité (113).

7. Système hydraulique selon l'une quelconque des revendications précédentes, dans lequel l'accumulateur de pression (25) peut être relié via la voie de sélecteur de vitesse (32) au cylindre hydraulique de sélecteur de vitesse (22), en amont duquel est montée la soupape de sélecteur de vitesse (38) pouvant être actionnée par le dispositif de commande (39), avec laquelle une pression hydraulique appliquée au cylindre hydraulique de sélecteur de vitesse (22) peut être réglée, laquelle soupape de sélecteur de vitesse (38) peut être ajustée entre deux positions d'écoulement (D1, D2) afin de déplacer un piston (33) dans des courses de piston opposées sur des courses d'actionnement de piston (s₁, s₂) ainsi que des vitesses de piston (ṡ₁, ṡ₂) dans le cylindre d'actionnement hydraulique (22), dans lequel chaque course de piston est reliée à un prélèvement de fluide hydraulique (V₁, V₂) dans le système hydraulique, **caractérisé en ce que** le dispositif de commande (39) présente un module de diagnostic (79) avec lequel un diagnostic du débit volumique d'alimentation est réalisé, dans lequel une unité d'évaluation (114) détermine un débit volumique d'alimentation réel (V_{réel}) et le compare à un débit volumique d'alimentation de consigne (V_{consigne}) et, en cas d'écart significatif, détecte un cas de défaut qui peut être stocké dans une mémoire de défauts de débit volumique d'alimentation (117).

8. Système hydraulique selon l'une quelconque des revendications 2 à 7, **caractérisé en ce qu'**au moins deux, en particulier toutes les mémoires de défauts (81, 83, 87, 91, 103, 109, 113, 117) sont en liaison de signal avec une unité d'analyse (120), dans laquelle les signaux de défaut peuvent être lus, et **en ce qu'**une matrice d'évaluation est déposée dans l'unité d'analyse (120), matrice dans laquelle les signaux de défaut provenant des mémoires de défauts (81, 83, 87, 91, 103, 109, 113, 117) peuvent être combinés, et **en ce que**, pour un diagnostic de système hydraulique complet, l'unité d'analyse (120) évalue tous les signaux de défaut en combinaison.
